# EUROPÄISCHE PATENTSCHRIFT

(11) **EP 3 765 640 B1**
(45) Veröffentlichungstag und Bekanntmachung des Hinweises auf die Patenterteilung: **12.06.2024**
(21) Anmeldenummer: 18713198.2
(22) Anmeldetag: 22.03.2018
(51) Int. Cl.: C14C 11/00, D06N 3/14, C08J 9/30, B32B 27/40, C08G 18/48, C08G 18/44, C08G 18/42, C08G 18/08, B32B 5/02, B32B 5/20, B32B 9/02, B32B 9/04, C08J 9/32, D06N 3/00, D06N 3/18, B32B 5/24

(54) **SCHICHTMATERIAL UND VERFAHREN ZUR HERSTELLUNG EINES SCHICHTMATERIALS**
LAYERED MATERIAL AND PROCESS FOR PREPARING A LAYERED MATERIAL
MATÉRIAU DE COUCHE ET PROCÉDÉ DE PRÉPARATION D'UN MATÉRIAU DE COUCHE

(30) Priorität: 13.03.2018 WO PCT/EP2018/056212
(43) Veröffentlichungstag der Anmeldung: 20.01.2021
(73) Patentinhaber: Schaefer, Philipp, 30175 Hannover (DE)
(72) Erfinder: Schaefer, Philipp, 30175 Hannover (DE)
(74) Vertreter: Wildhack & Jellinek Patentanwälte
(86) Internationale Anmeldenummer: PCT/EP2018/057230
(87) Internationale Veröffentlichungsnummer: WO 2019/174754

(56) Entgegenhaltungen:
- DE-A1- 4 230 997
- DE-A1-102006 039 261
- US-A1- 2015 284 902

## Beschreibung

Die Erfindung betrifft ein Verfahren zur Herstellung eines Schichtmaterials gemäß dem Oberbegriff des Patentanspruches 1.

Des Weiteren betrifft die Erfindung ein Schichtmaterial gemäß dem Oberbegriff des Patentanspruches 10 sowie gemäß dem Verfahren bzw. unter Verwendung eines erfindungsgemäßen Schichtmaterials erhältliche Gegenstände gemäß Patentanspruch 15.

Die DE 4230997 A1 offenbart ein Schichtmaterial, nämlich ein beschichtetes Leder, wobei Rindsspalt-, Rind- bzw. Schafleder das jeweilige Trägermaterial ist. Dabei wird derart vorgegangen, dass das Trägermaterial mit einem PU-Schlagschaum in einer Auftragsmenge von 120 bis 250 g/m² auf Basis wässriger PU-Dispersionen, enthaltend zwei wässrige Polyurethandispersionen, beschichtet wird. Auf die PU-Schlagschaumschicht werden Lackschichten, eine davon geprägt, aufgetragen. Die derart beschichteten Leder oder auch Textilien sind u.a. für Polstermöbel, Schuhwerk, Bekleidung und Koffer einsetzbar. Eine weitere Schicht aus einer ungeschäumten PU-Dispersion wird nicht vorgesehen. Eine direkte Prägung der PU-Schlagschaumschicht bzw. die Auftragung von Weich-PVC oder PU-Dispersion auf ein Textilmaterial vor Aufbringung des PU-Schlagschaums erfolgt nicht.

In der US-Patentschrift US 6177198 werden durch eine PU-Beschichtung durchgehende Kapillaren beschrieben. Diese Kapillaren gehen durch alle Schichten des Materials durch und haben unterschiedliche Durchmesser und bilden unterschiedliche Vertiefungen auf der Oberfläche aus. Dadurch tritt bei den größeren Kapillaren von außen Wasser ein und die Oberfläche wird vor allem bei glatten Narben, unansehnlich.

Bekannte Materialien bzw. Beschichtungen, die auf Umkehr-Matrizen hergestellt wurden, bestehen aus mehreren Schichten. Schichtentrennungen sind daher vorprogrammiert. Durch einen Schichtenaufbau entsteht aber auch ein sogenannter Sperrholzeffekt, d.h. die Trägermaterialien werden nach der Beschichtung automatisch steifer. Die bekannten Schichtmaterialien sind relativ hart. Erfindungsgemäß sollen weiche Schichtmaterialien erstellt werden, die ohne Kapillaren und mit einer homogen aussehenden Oberfläche eine Wasserdampfdurchlässigkeit von zumindest 0,6 mg/cm²/h oder auch mehr bzw. zumindest 1,2 mg/cm²/h gemäß DIN EN ISO 14268 aufweisen und die beim Heißprägen - aufgrund ihrer erfindungsgemäß vorgesehenen Schaumstruktur - verhindern, dass die volle Temperatur der Matrize beim Verpressen an die Trägerschicht weitergeführt wird. Höhere Temperaturen werden sowohl bei Mikrofaservlies als auch bei Leder als Stress empfunden und die Trägermaterialien verhärten und verlieren an Stärke, insbesondere wenn Feuchtigkeit, Hitze und Druck gemeinsam die Trägerschicht beaufschlagen.

Nachteilig bei bekannten mit Perforationen oder Kapillaren versehenen Materialien ist auch, dass Beschichtungen, zum Beispiel bei Schuhen, Feuchtigkeit aufnehmen und diese in den Träger weiterleiten.

Die Erfindung hat als wesentliche Aufgabe, ein Schichtmaterial zu erstellen, das einfach herstellbar und lagerfähig ist, eine exakte Oberflächenstrukturierung zulässt, beste mechanische bzw. physikalische Eigenschaften besitzt und wirtschaftlich herstellbar und weiterverarbeitbar ist. Die Schicht soll aus wässrigen PU-Dispersionen einschichtig aufgebaut sein und auch bei einer Stärke von mehr als 0,4 mm keine Lunker, Einfallstellen, Blasen oder beim Trocknen entstehende Risse aufweisen. Ferner soll die nasse Beschichtung beim Trocknen bzw. Wassernutzung nicht wesentlich an Dicke verlieren.

Erfindungsgemäß ist ein Verfahren der eingangs genannten Art mit den im Kennzeichen des Anspruches 1 angeführten Merkmalen charakterisiert.

Bei dieser Vorgangsweise erhält man ein Schichtmaterial, bei dem eine Trägerschicht eine oberflächenstrukturierbare Schicht trägt, welches Schichtmaterial auch nach längerer Lagerung optimal weiterverarbeitet werden kann. Dazu ist es lediglich nötig, die oberflächenstrukturierbare Schicht thermisch zu aktivieren und oberhalb ihres Erweichungspunktes thermoplastisch mit einer Matrize oder einer Prägewalze unter Wärme und Druckbeaufschlagung zu verformen. Die Schicht behält nach Abzug von der Matrize ihre Struktur bei.

Von Vorteil ist es, wenn die Schicht nach dem Aufbringen auf die Trägerschicht auf einen Wassergehalt von weniger als 1,5 Gew.-%, vorzugsweise weniger als 0,5 Gew.-%, insbesondere bis zur Wasserfreiheit, getrocknet wird, und/oder zur Erstellung des PU-Schlagschaums eine wässrige PU-Dispersionsmischung auf Basis von aliphatischem Polyether- und/oder Polyester- und/oder Polycarbonatpolyurethan eingesetzt wird. Der PU-Schlagschaum wird mit einer PU-Dispersionsmischung erstellt, wobei die einzelnen zur Erstellung der PU-Dispersionsmischung eingesetzten PU-Dispersionen in getrocknetem Zustand unterschiedliche Erweichungspunkte zeigen. Die PU-Dispersionen werden so gewählt, dass die PU-Dispersionsmischung vor ihrem Vernetzen thermoplastische Eigenschaften besitzt. Die zur Erstellung des PU-Schlagschaums eingesetzte Fertigmischung enthält 65 bis 91 Gew.-% PU-Dispersionen, wobei die für die Bildung des PU-Schlagschaums eingesetzten PU-Dispersionen jeweils 35 bis 52 Gew.-% Feststoffe enthalten, und/oder das Polyurethan der eingesetzten PU-Dispersionen zumindest teilweise lineare und/oder zumindest teilkristalline und/oder thermoplastische oder amorphe Struktur besitzt.

Eine aufschäumbare PU-Dispersionsmischung enthält somit zwischen 65 bis 91 Gew.-% Polyurethandispersionen bezogen auf das Gesamtgewicht des PU-Schlagschaums. Der Rest sind Zuschlagstoffe wie Polyacrylatdispersionen, Verdicker, Pigmente, flammhemmende Zusätze, Schäummittel und Vernetzer. Es kommen PU-Dispersionen zum Einsatz, die jeweils zwischen 35 bis 52 Gew-%, bezogen auf das Gesamtgewicht der jeweiligen PU-Dispersion, Feststoffe enthalten.

Der Erweichungspunkt des Schlagschaums kann nicht nur durch Wahl des Erweichungspunktes der einzelnen PU-Dispersionen festgelegt werden, sondern kann auch durch Zugabe von Vernetzern gesteuert werden. Üblicherweise werden 1,5 bis 7 Gew.-%, vorteilhafterweise 3 bis 5 Gew.-%, Vernetzer bezogen auf das Gesamtgewicht des PU-Schlagschaums eingesetzt. Ein derartiger Vernetzter ist beispielsweise der Vernetzer XL80 der Firma Lanxess.

Es werden vorteilhaft PU-Dispersionen eingesetzt, welche im noch unvernetzten Zustand bzw. im getrockneten Zustand einen Erweichungspunkt haben, der oberhalb von 45 °C liegt, und somit oberhalb dieser Temperatur weich und klebrig werden. Der Erweichungspunkt kann bei Einsatz von Vernetzern auch oberhalb von 95 °C liegen. Vor dem Vernetzen besitzen die getrockneten PU-Dispersionen bzw. PU-Dispersionsmischungen thermoplastische Eigenschaften und sind bei diesen Temperaturen unter Druck fließfähig und lassen sich bleibend verformen. Für das Prägen soll die Schicht aus Schlagschaum honigartig, zähflüssig aber nicht dünnflüssig sein, um die Struktur der Matrize exakt und rasch annehmen zu können. Je nach Anwendungszweck des Schichtmaterials kann der Erweichungspunkt eingestellt bzw. gewählt werden.

Zweckmäßig werden Verdickungsmittel auf wasserfreier Polyacrylatbasis mit zähflüssiger Konsistenz oder Ammoniak enthaltende Schaumhilfspasten, wie z.B. Millio-Form, eingesetzt. Verdicker auf Polyacrylatbasis, welche den PU-Schlagschaum stabilisieren, werden in einem Ausmaß von 1,5 bis 5 Gew.-% des Gesamtgewichtes des PU-Schlagschaums eingesetzt.

Für die Erstellung des PU-Schlagschaums werden PU-Dispersionen auf Basis von aliphatischen Polyether- und/oder Polyester- und/oder Polycarbonatpolyurethanen eingesetzt. Die für die Erstellung von PU-Dispersionsmischungen eingesetzten PU-Dispersionen können unterschiedliche Erweichungspunkte haben bzw. werden nach diesem Gesichtspunkt ausgewählt bzw. zusammengemischt. Es ist somit möglich, gezielt unterschiedliche Erweichungspunkte bzw. Erweichungsbereiche für den getrockneten PU-Schlagschaum einzustellen. Durch Erwärmen auf diesen Erweichungspunkt bzw. oberhalb davon oder auf einen das Prägen zulassenden Erweichungsbereich, ist es möglich, der Oberfläche des wasserfreien, vor seinem Vernetzen thermoplastischen bzw. thermoplastisch oberflächenstrukturierbaren PU-Schlagschaums eine gewünschte Oberflächenstruktur zu verleihen.

Die für die Erstellung des PU-Schlagschaums eingesetzten PU-Dispersionen enthalten vorteilhaft jeweils 35 bis 52 Gew.-% PU-Feststoff, bezogen auf das jeweilige Gewicht der eingesetzten PU-Dispersion. Die einzelnen PU-Dispersionen werden sodann zu der PU-Dispersionsmischung vermengt bzw. vermischt und die zur Erstellung des PU-Schlagschaums eingesetzte PU-Dispersionsmischung enthält 65 bis 91 Gew.-% derartiger PU-Dispersionen, bezogen auf das Gesamtgewicht des PU-Schlagschaums.

Besonders gute Eigenschaften werden im Hinblick auf Haftung der Beschichtung 2 mit dem Träger 1 erzielt, wenn eine Dispersionsmischung zum Einsatz kommt, die zwischen 18 und 52 Gew.-% - bezogen auf die fertige Dispersionsmischung - einer handelsüblichen PU-Dispersion auf Polyesterbasis mit einem Feststoffanteil von ca. 40 % enthält, wie sie zum Beispiel als wärmeaktivierbarer Industriekontaktkleber unter dem Namen Luphen von der Firma BASF angeboten wird. Die restlichen 39 bis 73 Gew.-% werden von einer ebenfalls ca. 40 % Feststoffe enthaltenden PU-Dispersion mit einem Erweichungspunkt von über + 125 °C gebildet, z.B. einer Dispersion mit der Bezeichnung DLV-N der Firma Lanxess. Diese Mischung führt insbesondere bei Mikrofaservliesen und bei geschliffenen Narbenledern zu außergewöhnlich hohen Haftungseigenschaften ohne das fertige Produkt nennenswert zu verhärten.

Das Polyurethan von PU-Dispersionen besitzt zumindest teilweise lineare und/oder zumindest teilkristalline und/oder amorphe Struktur und ist in getrocknetem Zustand thermoplastisch verformbar und als Schlagschaum auch verdichtbar.

Der Einsatz von PU-Dispersionsmischungen erfolgt vor allem um die Hydrolysebeständigkeit, die Temperaturbeständigkeit und das Löslichkeitsverhalten des Schlagschaums einzustellen bzw. zu optimieren.

Die eingesetzten PU-Dispersionen für die PU-Dispersionsmischung zur Erstellung des PU-Schlagschaums weisen einen pH-Wert von 6 bis 8,5 auf.

Vorteilhaft ist es für die Lagerung, wenn der getrocknete PU-Schlagschaum wasserfrei und nicht vernetzt ist und bei einer Temperatur zwischen 110 bis 160 °C erweicht bzw. klebrig wird bzw. hoch viskos schmilzt und unter Druck fließt, um die Struktur der Matrize annehmen zu können.

Der PU-Schlagschaum wird erstellt, indem in eine PU-Dispersion oder eine PU-Dispersionsmischung ein Gas, vorzugsweise Luft oder Stickstoff, eingebracht wird, wobei in einen Liter der PU-Dispersionsmischung so viel Gas eingebracht bzw. eingeschlagen wird, dass ein Liter des Ausgangsmaterials ein Volumen von 1,20 bis 1,70 I, vorzugsweise 1,30 bis 1,50 I, annimmt.

Die erfindungsgemäße Vorgangsweise ist einfach und wirtschaftlich. Es ist möglich, dass der PU-Schlagschaum auf die Trägerschicht, insbesondere airless, aufgesprüht oder im Siebdruckverfahren oder mit zumindest einer Walze oder einer Rakel in gleicher Dicke aufgebracht wird. Auf diese Weise ist es einfach, die gewünschte Dicke der aufzubringenden Schicht aus PU-Schlagschaum einzustellen.

Vor oder gleichzeitig mit einer Strukturierung des PU-Schlagschaums wird mit einer Matrize auf die Schicht direkt oder durch vorangehendes Aufbringen auf die Matrize eine weitere Schicht aus einer gegebenenfalls eine unterschiedliche Farbe besitzende PU-Dispersion aufgebracht bzw. angebunden und vernetzt bzw. verfestigt. Diese Schicht hat eine Dicke von 0,015 bis 0,060 mm, vorzugsweise 0,020 bis 0,045 mm. Auf diese Weise kann neben einer Schutzwirkung eine unterschiedliche Farbgebung für die Oberfläche des Schichtmaterials erzielt werden. Werden Teilbereiche der aufgebrachten weiteren Schicht z.B. durch Lasern entfernt und besitzt die aufgebrachte weitere Schicht eine andere Farbe als der PU-Schlagschaum, können farblich unterschiedlich gestaltete Muster auf dem Schichtmaterial ausgebildet werden. Das Aufbringen der Schicht kann direkt auf den bereits auf der Trägerschicht befindlichen vorteilhaft schon getrockneten PU-Schlagschaum erfolgen. Es ist aber auch möglich, vor der Prägung des PU-Schlagschaums mit der Matrize auf die Matrize diese weitere Schicht aufzubringen und im Zuge der Prägung des PU-Schlagschaums mit der Matrize die weitere Schicht direkt von der Matrize mit der Oberfläche des PU-Schlagschaums zu verbinden bzw. auf diese zu übertragen.

Die mit der Schicht aus getrocknetem PU-Schlagschaum versehene Trägerschicht bzw. das Schichtmaterial kann in Bahnenware oder in Form von Zuschnitten gefertigt werden und ist nach Trocknen des PU-Schlagschaums lagerbar.

Vorteilhafterweise ist vorgesehen, dass zur Erstellung eines oberflächenstrukturierten Schichtmaterials die getrocknete Schicht, gegebenenfalls gleichzeitig bzw. gemeinsam mit der weiteren Schicht, mit einer strukturierten Matrize oder Prägewalze druckbeaufschlagt und gegebenenfalls dickenreduziert wird, und zwar bei einer Temperatur von 110 bis 160 °C, wobei für eine erwärmte Matrize eine Kontaktdauer von 2 bis 18 s und ein Kontaktdruck von 0,02 bis 1,8 kg/cm² und bei einer kalten Prägewalze eine Kontaktdauer von 0,5 bis 15 s, vorzugsweise 3 bis 15 s, und ein Kontaktdruck von 0,02 bis 1,8 kg/cm² eingehalten wird, oder die Schicht 2 aus PU-Schlagschaum, gegebenenfalls gleichzeitig bzw. gemeinsam mit der weiteren Schicht, auf eine Temperatur von 110 bis 160 °C, z.B. mit IR-Strahlung, gebracht und mit einer kalten oder maximal auf 75 °C erwärmten Prägewalze druckbeaufschlagt und strukturiert und gegebenenfalls dickenreduziert wird.

Es kann vorgesehen sein, dass der PU-Schlagschaum Zusätze enthält, z.B. gasgefüllte Mikrohohlkugeln und/oder Pigmente und/oder Polyacrylatdispersionen und/oder Silikone und/oder Mattierungsmittel und/oder Verdicker und/oder Flammhemmmittel. Dabei können bezogen auf das Gesamtgewicht des PU-Schlagschaums 1,5 bis 3,5 Gew.-% Mikrohohlkugeln bzw. 2 bis 12 Gew.-% Pigmente bzw. 1,8 bis 4,5 Gew.-% Polyacrylate als Verdicker und Schaumstabilisator bzw. 1 bis 4 Gew.-% Silikone zugesetzt werden.

Ferner kann vorgesehen sein, dass der PU-Schlagschaum derart erstellt wird, dass die Schicht nach der Strukturierung mit der Matrize eine Dichte von 0,780 bis 1,03 g/cm³ besitzt. Die Dichte hängt wesentlich von der Art und Menge der Pigmente ab. Ein mit Titandioxid weiß eingefärbter Schlagschaum hat naturgemäß eine höhere Dichte als ein schwarzer Schlagschaum. Des Weiteren kann vorgesehen sein, dass dem PU-Schlagschaum Vernetzer im Ausmaß von 0,9 bis 4,2 Gew.-% und/oder 8 bis 25 Gew.-% jeweils einer 40 bis 60 %-igen Acrylatdispersion zugesetzt werden. Die Gewichtsangaben beziehen sich auf das Gesamtgewicht des PU-Schlagschaums.

Die auf die Oberfläche des getrockneten PU-Schlagschaums aufgebrachte weitere Schicht kann dieselbe oder eine ähnliche Zusammensetzung aufweisen wie die für den PU-Schlagschaum eingesetzte(n) PU-Dispersionsmischung(en). Vor allem können aber die eingesetzten Farbpigmente unterschiedliche Farbe besitzen.

Für die Erstellung eines Schichtmaterials, bei dem als Trägerschicht ein Textilmaterial, z.B. ein Gewebe oder Gewirke, eingesetzt wird, hat es sich als besonders vorteilhaft erwiesen, wenn vor Aufbringen der Schicht aus PU-Schlagschaum auf eine von einem Textilmaterial, z.B. Gewebe oder Gewirke, gebildete Trägerschicht auf die Oberfläche des Textilmaterials eine dünne Lage aus PU-Schlagschaum oder aus gegebenenfalls geschäumten Weich-PVC jeweils mit einer Stärke von 0,25 bis 0,40 mm oder aus einer gleichstarken vernetzten PU-Dispersionsschlagschaumschicht besteht. Die Trägerschicht wird somit mit einer Schicht aus geschäumten Weich-PVC oder einem vernetzten PU-Schlagschaum beschichtet.

Ein erfindungsgemäßes Schichtmaterial ist durch die im Kennzeichen des Anspruchs 10 angeführten Merkmale charakterisiert. Ein derartiges Schichtmaterial kann auch nach längerer Lagerungszeit bei erhöhter Temperatur und gleichzeitiger Anwendung von Druck oberflächenstrukturiert werden.

Es kann vorgesehen sein, dass der PU-Schlagschaum des Schichtmaterials ein spezifisches Gewicht von 0,8 bis 1,03 kg/dm³ aufweist, und/oder die Schicht aus PU-Schlagschaum eine Dicke von 0,030 bis 0,40 mm, vorzugsweise 0,070 bis 0,350 mm, aufweist, und/oder die für die Schicht eingesetzten Polyurethane aliphatische Polyurethane auf Polyether- oder Polyester- oder Polycarbonatbasis sind, und/oder die Schicht aus PU-Schlagschaum Pigmente und/oder Vernetzer und/oder Polyacrylate und/oder Mikrohohlkugeln enthält, und/oder die Schicht aus verfestigtem, getrocknetem PU-Schlagschaum eine Shore-A-Härte von 28 bis 68 aufweist, und/oder auf der Oberfläche der Schicht eine Strukturierung ausgebildet bzw. eingeprägt ist, und/oder die strukturierte und vernetzte Schicht thermoplastisch ist, und/oder die Schicht aus PU-Schlagschaum eine Dicke aufweist, die nur 2 bis 18 %, vorzugsweise 3 bis 9 %, dicker als eine Schicht ist, die aus einer gewichtsgleichen Menge aus ungeschäumter PU-Dispersion bzw. ungeschäumter PU-Dispersionsmischung gleicher Zusammensetzung gebildet ist, nachdem diese Menge über eine gleich große Fläche wie der PU-Schlagschaum verteilt wurde.

Die durch die Reduktion der Dicke erfolgende Dichtezunahme erfolgt gleichmäßig über die Dicke der Schicht 2.

Die Messung der Shore-A-Härte erfolgt derart, dass eine Vielzahl der zu untersuchenden Schichten aus dem jeweiligen Material, vorzugsweise aus verfestigtem oder getrocknetem oder verdichtetem PU-Schlagschaum, angefertigt und gestapelt wird und damit ein Prüfkörper mit einer Stärke von 5 mm in Anlehnung an die Norm DIN ISO 7619-1 erstellt wird, der sodann vermessen wird.

Die Verwendbarkeit und Verarbeitbarkeit des Schichtmaterials wird optimiert bzw. ein Oberflächenschutz des strukturierten PU-Schlagschaums wird erreicht, wenn bei einer von einem Textilmaterial gebildeten Trägerschicht zwischen der Oberfläche des Textilmaterials und der Schicht eine dünne Lage aus geschäumten Weich-PVC oder aus einer vernetzten PU-Dispersion oder einer vernetzten PU-Dispersionsmischung, vorzugsweise aus aliphatischem Polyurethan auf Polyester- oder Polyether- oder Polycarbonatbasis, ausgebildet ist, welche Lage eine Dicke von 0,25 bis 0,40 mm besitzt und eine Verbindungsschicht für die aufzubringende Schicht aus PU-Schlagschaum darstellt, wobei gegebenenfalls die beiden Schichten eine Gesamtdicke von 0,35 bis 0,80 mm ausbilden. Vorteilhafterweise kann vorgesehen sein, dass auf die Oberfläche der Schicht 2 eine dünne wärmestrukturierbare, nicht geschäumte Schicht aus einer getrockneten PU-Dispersion mit einer Dicke von 0,0150 bis 0,50 mm, vorzugsweise 0,020 bis 0,0350 mm, aufgebracht bzw. an die Schicht angebunden ist, wobei in der Schicht aus PU-Schlagschaum eine der Strukturprägung in der Schicht entsprechende Struktur ausgebildet bzw. eingeprägt ist, und wobei die Schicht vorteilhafterweise eine größere Shore-A-Härte als die Schicht aus PU-Schlagschaum bzw. eine Härte von mehr als 70 Shore-A aufweist und gegebenenfalls 1 bis 4 Gew.-% Polysiloxane enthält.

Sofern als Trägerschicht ein Leder eingesetzt wird, hat es sich als vorteilhaft erwiesen, wenn das Narbenleder ein vollnarbiges Rindleder, vorzugsweise Rinds-Spaltleder, Kalbleder, Ziegenleder oder Känguruleder ist, bei welchem Leder die Narbenschicht vorteilhafterweise um mindestens 5 % bis maximal 60 % mechanisch entfernt ist.

Sofern als Trägerschicht ein Mikrofaservlies vorgesehen ist, ist es von Vorteil, wenn die Fasern des Mikrofaservlies aus Polyester oder Polyamid bestehen, wobei die Hohlräume zwischen den Fasern mit einem Kunststoff, vorzugsweise auf Polyurethanbasis imprägniert bzw. gefüllt sind, der eine Schaumstruktur oder eine koagulierte Mikrozellenstruktur aufweist, und/oder der PU-Schlagschaum eine offenzellige Struktur besitzt und/oder luftdurchlässig ist und/oder eine Wasserdampfdurchlässigkeit von mehr als 0,050 mg/cm²/h, vorzugsweise von mehr als 0,12 mg/ cm²/h, gemäß DIN EN ISO 14268 aufweist.

Von Vorteil ist es, wenn der PU-Schlagschaum offenzellig ausgebildet ist, luftdurchlässig und auch wasserdampfdurchlässig ist.

Das erfindungsgemäße Schichtmaterial eignet sich besonders vorteilhaft für die Herstellung von Gegenständen wie z.B. Bahnenware, Zuschnitte, Stanzteile, Schuhteile, Sport- und Arbeitsschuhe, Schuheinlegesohlen, Taschen, Lederwaren, Lenkradbezüge, Polsterungsüberzüge, Innenwandverkleidungen und Sitzbezüge für Kraftfahrzeuge und partiell Beschichtung für den Schutzbereich von Textilien Uniformen, Arbeitsbekleidungen, Sicherheitsbekleidungen.

Die erfindungsgemäß erstellten Gegenstände können eine mittels einer Matrize oder Prägewalze beliebig gestaltete Oberfläche besitzen, in die Narbenlederstrukturen, Textilstrukturen, geometrische Strukturen, Namenszüge, Logos sowie Oberflächenbereiche unterschiedlicher Struktur und/oder unterschiedlicher Rauigkeit ausgebildet werden können. Dazu ist es lediglich erforderlich, die strukturgebende Fläche der Matrize aus Silikonkautschuk oder die vorzugsweise mit Silikonkautschuk belegte Prägewalze entsprechend zu gestalten. Die Gestaltung der Oberflächen der Matrize oder der Prägewalze kann durch Abformen zum Beispiel eines Textils mechanisch oder durch Laserabtragung erfolgen. Es muss dazu nicht unbedingt die für die Strukturgebung bei der Herstellung aus Schichtmaterials eingesetzte Matrize oberflächenbearbeitet worden sein, sondern die eingesetzte Matrize kann auch eine Negativmatrize einer ursprünglich erstellten Positivmatrize sein.

Die Trägerschicht ist durch den PU-Schlagschaum nicht sichtbar und es kann somit unterschiedlichen Trägerschichten durch gleiche Strukturierung der Oberfläche der Schicht aus PU-Schlagschaum gleiches Aussehen verliehen werden.

Die Erfindung ermöglicht eine Materialeinsparung an einzusetzendem Polyurethan, da die PU-Dispersionen geschäumt werden und damit die Menge an erforderlichen Polyurethan durch die in dem PU-Schlagschaum enthaltenden Luftblasen verringert wird. Damit ergibt sich gleichzeitig für die Schicht aus PU-Schlagschaum ein geringeres Gewicht. Es werden ausschließlich wasserbasierte PU-Dispersionen eingesetzt, womit die Herstellung umweltfreundlich verläuft und schädliche bzw. umweltschädliche Verfahrensrückstände vermieden werden. Schließlich ist ein rascher Wechsel von unterschiedlichen Matrizen möglich und damit wird eine individuelle Fertigung von Gegenständen leicht möglich. Besonders vorteilhaft ist es, wenn die Trägerschicht in Form von Zuschnitten eingesetzt werden, die mit PU-Schlagschaum beschichtet werden. Es entfällt dann die Entsorgung von Abfällen der Trägerschicht bzw. wird der PU-Schlagschaum lediglich auf den Zuschnitt aufgetragen und mit PU-Schlagschaum versehene Reste von Trägerschichten fallen nicht an. Besonders wirtschaftlich ist es, wenn aus einem großflächigen mit PU-Schlagschaum beschichteten Schichtmaterial Kleinformatteile bzw. Stanzteile herausgetrennt und geprägt werden.

In der Zeichnung ist schematisch ein Schnitt durch ein erfindungsgemäß aufgebautes Schichtmaterial dargestellt. Dieses Schichtmaterial wird derart erstellt, dass auf die Oberfläche der Trägerschicht 1 eine Schicht 2 aus einem PU-Schlagschaum angebunden bzw. aufgebracht wird. Wenn es sich bei der Trägerschicht 1 um ein Textilmaterial handelt, so kann dieses Textilmaterial als Basisschicht zur Vorbeschichtung oberflächlich mit einer Lage 5 aus einem Weich-PVC oder aus einem PU-Schlagschaum erstellt aus einer PU-Dispersion oder PU-Dispersionsmischung versehen werden, um die Schicht 2 aus PU-Schlagschaum mit dem allenfalls groben Textilmaterial gut verbinden zu können. Bei einer Trägerschicht 1, die von einem Textilmaterial, z.B. Gewebe oder Gewirke, gebildet ist, wird die Trägerschicht 1 mit einer Lage 5 aus PU-Schlagschaum mit einer Stärke zwischen 0,20 bis 0,35 mm oder einer Lage 5 aus einem geschäumten Weich-PVC mit einer Stärke zwischen 0,250 bis 0,450 mm versehen. Dadurch wird ein Eindrücken der Schicht 2 in ein grobes Textilmaterial ausgeschlossen. Beim Prägen der Schicht 2 mit der Matrize 4 bzw. einer Prägewalze 10 wird die Schicht 2 zwar verformt, aber sie dringt nicht in die Trägerschicht 1 ein.

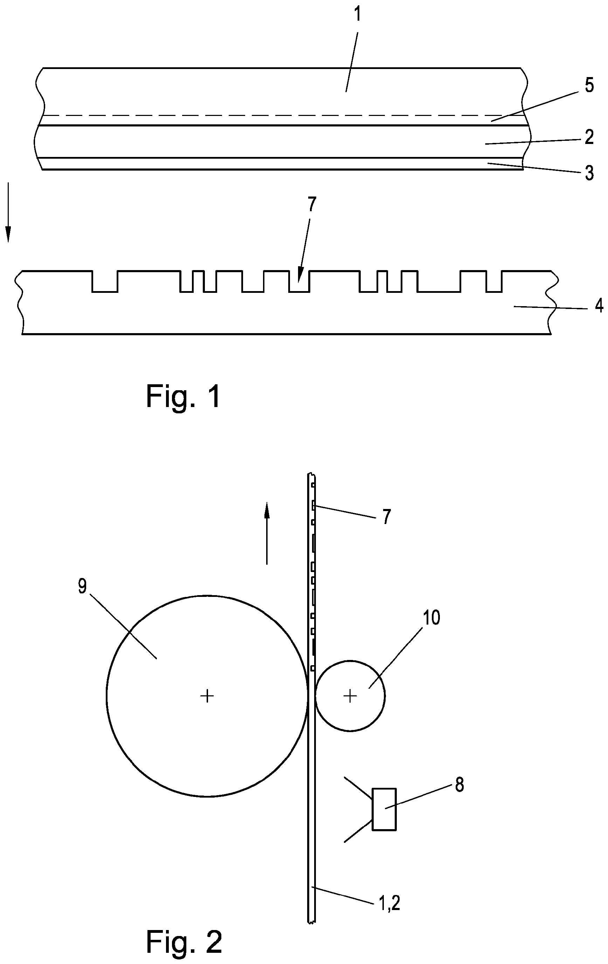

Auf die Schicht 2 aus PU-Schlagschaum kann vor ihrer Strukturierung eine Schicht 3 aus einer nicht geschäumten PU-Dispersion oder PU-Dispersionsmischung aufgetragen werden. Mit einer schematisch dargestellten Matrize 4 oder einer Prägewalze 10 - wie in Fig. 2 dargestellt - kann der Schicht 2 bzw. der allenfalls vorhandenen Schicht 3 die angedeutete Oberflächenstruktur 7 verliehen werden. Mit entsprechenden Pressen bzw. Andrückrollen 9 und Heizeinrichtungen 8 (Infrarotstrahler) erfolgt das Aneinanderdrücken der Trägerschicht 1 und der Matrize 4 bzw. das Andrücken an die Prägewalze 10. Die Matrize 4 wird für den Prägevorgang auf die erforderliche Temperatur erwärmt, um den PU-Schlagschaum auf die gewünschte Erweichungstemperatur zu bringen. Wenn eine kalte Prägewalze 10 eingesetzt wird, kann die Schicht 2 vor ihrem Kontakt mit der Prägewalze 10 bzw. Matrize 4 erwärmt werden, beispielsweise mit einem Infrarotstrahler 8. Bei einem Prägen mit einer Stahlwalze 10 wird diese Walze nicht erwärmt, damit ein Anhaften der Schicht 2 oder 3 sicher vermieden wird. Die Schichten 3 und 5 können auch mit der(n) gleichen PU-Dispersionsmischung(en) wie der PU-Schlagschaum gebildet sein.

Der Einsatz eines PU-Schlagschaums bietet gegenüber nicht geschäumten Beschichtungen den Vorteil, dass beim Prägen unter Temperatur und Druck der oberflächenstrukturierte PU-Schlagschaum luft- und wasserdampfdurchlässig ist bzw. bleibt und sich beim Erwärmen ausdehnt. Luft und Feuchtigkeit, die beim Auflegen auf die Schicht 2 auf die Matrize 6 vorhanden sind, können entweichen, sodass ein lunker- und blasenfreies Prägen erfolgt.

Wenn der PU-Schlagschaum getrocknet ist, kann vor einer Weiterverarbeitung das Schichtmaterial zu Zuschnitten gestanzt werden und die Zuschnitte werden sodann unabhängig voneinander einer Prägung bzw. Oberflächenstrukturierung unter Druck und Temperatur unterzogen.

Die Schicht 3 kann entweder direkt auf die PU-Schlagschaumschicht 2 aufgebracht werden oder sie wird auf die Matrize 4 aufgebracht und auf der Matrize wasserfrei bzw. nahezu wasserfrei getrocknet und gegebenenfalls so vorvernetzt, dass sie dort abziehbar ist und beim Prägen mit der PU-Schlagschaumschicht 2 untrennbar verbunden werden kann; am geprägten Schichtmaterial ist dies nicht mehr erkennbar.

Wenn eine herkömmliche, ungeschäumte PU-Dispersionsschicht bei einer Tempeartur von + 120 °C getrocknet wird, so bildet sich eine Haut auf ihrer Oberfläche und die Beschichtung wird rissig. Bei Einsatz eines PU-Schlagschaums kann jedoch sofort bei einer Temperatur von etwa 120 °C mit dem Trocknen und Prägen angefangen werden und in der vorgetrockneten Schicht aus PU-Schlagschaum bilden sich keine Risse, weil sich keine Haut bildet, die den Abtransport von Wasser behindert. Außerdem behält die Schicht nach dem Trocknen im Gegensatz zu Nichtschlagschaum-Schichten nahezu ihre ursprüngliche Stärke.

Die erfindungsgemäße Vorgangsweise setzt vorteilhafterweise lediglich nicht toxische Materialien ein, die auch von ungelernten Arbeitskräften wirtschaftlich und sicher verarbeitet werden können. Des Weiteren ist das Prägen eines bereits getrockneten PU-Schlagschaums matrizenschonend, da der in dem PU-Schlagschaum enthaltene Vernetzer nicht nass ist und nicht in dem Ausmaß wie bei üblichen Beschichtungen mit der Matrize in Kontakt gelangt, weil Vernetzer aggressiv auf Silikonmatrizen einwirken und diese korrodieren.

Bei der Berechnung des spezifischen Gewichtes des PU-Schlagschaums ist zu berücksichtigen, dass dieser je nach Anwendungszweck unterschiedliches spezifisches Gewicht aufweisende Pigmente bzw. Zusatzstoffe enthalten kann. Beispielsweise ist Titandioxyd als weißer Zusatzstoff zur Farbgebung sehr schwer, wogegen andersfarbige Pigmente wesentlich geringeres spezifisches Gewicht aufweisen können. Falls der offenzellige PU-Schlagschaum auch mit Gas befüllte Mikrohohlkugeln, die bekanntlich geschlossene Zellen darstellen, enthält, müssen diese bei der Berechnung der Dichte durch Abzug berücksichtigt werden.

Die geschäumte und thermoplastische Schicht 2 aus PU-Schlagschaum wird mittels Wärme und Druck zum Annehmen der Negativstruktur der Matrize 4 komprimiert. Der überwiegend offenzellige Mikroschaum wird dabei so verdichtet, dass ein Teil der Mikrozellen verloren geht und der PU-Schlagschaum zwar noch eine offenzellige Mikroschaumstruktur aufweist, die aber dann nur ein Gewicht von 0,80 bis 1,03 kg/dm³ aufweist. Eine nicht geschäumte, mit der gleichen Formulierung hergestellte, kompakte Schicht hat dagegen eine Dichte von 1,050 bis 1,120 kg/dm³. Dies ergibt erfindungsgemäß einen Vorteil an Gewicht und eingespartem Material. Durch die beim Prägen kontrollierbare Verdichtung des PU-Schlagschaums lassen sich im Gegensatz zu ungeschäumten Beschichtungen auch tiefere Strukturen darstellen und verblüffend ist, dass die Weichheit erhalten bleibt.

Dadurch, dass die Schicht 2 wasserdampf- und luftdurchlässig ist, wird beim Heißverpressen entstehendes, expandierendes Gas bzw. allfälliger Restwasserdampf durch die Schicht 2 in die Trägerschicht 1 abgeleitet und es entstehen keine Lunker, Blasen und Risse. Beim Auflegen der trockenen Schicht 2 auf die heiße oder aufzuheizende Matrize ist es wichtig, dass die sich bei Wärme ausdehnende Luft bzw. Restgase, die in bzw. durch die Matrize nicht entweichen können, durch den offenzelligen PU-Schlagschaum bzw. durch die Trägerschicht 1 abgeführt werden können. Wenn die Schicht keine offenzellige Mikrostruktur aufweisen würde, würden in den Narbtälern der Matrizen Fehlstellen entstehen, die sich als unerwünschte Poren und Glanzstellen darstellen.

Strukturierte Oberflächen durch Heißverpressen kommen vor allem für Schuhe, Lenkräder, Taschen, Lederwaren, etc. zum Einsatz. Erfindungsgemäß können Formatteile z.B. in den Abmessungen zwischen 0,35 bis 0,9 m² einfach hergestellt werden, indem Sets von Formatteilen mit geringem Stanzabfall ausgestanzt werden. Ein Formatteil kann dabei so groß sein, dass er die Schaftteile beispielsweise für ein Paar Schuhe abdeckt.

Die komplette PU-Dispersionsmischung enthält vorteilhafterweise vor dem Aufschäumen 0,90 bis 4,2 Gew.-% Vernetzer, bezogen auf das Gesamtgewicht der PU-Dispersionsmischung. Vorteilhafterweise kann bzw. können die jeweiligen PU-Dispersionsmischungen zur Verbesserung der Hydrolysebeständigkeit 8 bis 25 Gew.-% einer 40 bis 50 %-igen Acrylatdispersion, die vorteilhafterweise mit Isocyanat vernetzbar ist, enthalten.

Die geschäumte Schicht kann auch nach dem Trocknen und vor dem Wirksamwerden des Vernetzers, was bei Normaltemperatur nach ca. 8 Stunden beginnt, leicht klebrig sein, was ein Stapeln, zumindest bei erhöhten Temperaturen, erschwert (Zusammenkleben). Um dies zu verhindern, wird, gegebenenfalls schon nach Trocknen und vor einem Stapeln mit einer Polyethylenfolie oder einem anderen dünnen Material, wie z.B. Trennpapier, die Schicht 2 abgedeckt. Erfindungsgemäß kann alternativ auch in einfacher und billiger Weise auf die Oberfläche des PU-Schlagschaums der Schicht 2 eine dünne, ca. 0,015 bis 0,060 mm dicke Schicht aus einer härteren PU-Dispersion aufgebracht und vernetzt bzw. getrocknet werden, die eine Härte von mehr als 70 Shore A aufweist und nicht geschäumt ist und gegebenenfalls 1 bis 4 Gew.-% eines Polysiloxans enthält.

Wenn eine 50 %-ige PU-Dispersion, d.h. 50 Teile Feststoff und 50 Teile Wasser, als Film von beispielsweise 0,15 mm Dicke auf einen Träger aufgetragen wird, so schrumpft bzw. kollabiert dieser Film beim Trocknen mittels Hitze um ca. 50 % durch Wasserverlust. Außerdem wird der Film beim Trocknen (z.B. im Wärmetrockenkanal) bei + 120 °C rissig, weil sich auf der Oberfläche eine Haut bildet, welche die Wasserentfernung aus dem Film unter der Haut erschwert. Die Trocknung muss also langsam und bei niedriger Temperatur unterhalb von 80 °C über einen längeren Zeitraum erfolgen, was unwirtschaftlich ist. Erfindungsgemäß wird jedoch ein PU-Schlagschaum eingesetzt, der beim Trocknen mittels Hitzezufuhr (z.B. im Trockenkanal) nicht kollabiert, da sich auf der Oberfläche keine Haut bildet, weil durch die großteils offenen Mikrozellen das Wasser bzw. der Wasserdampf kontinuierlich auch von unteren Bereichen durch die teilweise offene Mikrozellen nach oben hin und durch die Trägerschicht entweichen kann. Zu bemerken ist, dass beim Heißpressen bzw. Strukturieren, die Matrize vorteilhafterweise unten liegt und auf ihr das Schichtmaterial mit der Schicht 2 aus PU-Schlagschaum nach unten weisend angeordnet wird. Selbst bei einer Schichtdicke von 0,25 mm und bei einer Trockentemperatur von 120 °C entstehen beim Trocknen keine Risse. Ferner verkürzt sich die Trockenzeit um mehr als 60 % gegenüber einer nicht aufgeschlagenen Dispersionsschicht ohne offenzellige Mikrostruktur.

Ferner ist ein kompaktes PU-Material nicht ohne weiters bei niedrigen Temperaturen prägbar, da das Material beim Prägen verdichtet wird und fließen können muss. Hier bietet der leicht verformbare und nach einem Erweichen gut formbare Schlagschaum beträchtliche Vorteile.

Im Rahmen der Erfindung kann bei flachen Narbe der PU-Schlagschaum mit seiner zumindest teilweise offenzelligen Mikrostruktur beim Strukturieren der Oberfläche auf einer heißen Matrize bzw. Silikonunterlage oberflächlich verdichtet werden, sodass die Oberfläche in einer Stärke von 0,010 bis 0,020 mm weitestgehend homogen ausgebildet wird und dadurch abriebfester und strapazierfähiger ist.

Die Schicht 2 verhält sich zum Zeitpunkt der Oberflächengestaltung noch thermoplastisch und wird unter Druck und Hitzeeinwirkung so plastisch, dass sie auch die feinsten Mikrostrukturen in der Matrizenoberfläche abformt. Trotzdem kann die Trägerschicht 1 mit der strukturierten Schicht 2 unmittelbar nach dem Prägen, also im noch heißen Zustand der Schicht 2, von der Matrize 4 abgezogen werden. Bei besonders schwierigen Oberflächen, wie z.B. Strukturen im Nanobereich oder Veloursoberflächen, ist es zweckmäßig eine nicht geschäumte PU-Dispersion mit einem Feststoffanteil von 30 bis 35 Gew.-% in einer Menge von 35 bis 85 g/m² auf die Matrize 4 aufzutragen und nach Trocknen mit der Schicht 2 zu verbinden.

Die jeweilige(n) PU-Dispersionsmischung(en) enthält/enthalten zum Schäumen und zum Stabilisieren des aufgeschlagenen Schaums Schäumhilfsmittel, im einfachsten Fall ein Ammoniak enthaltendes Schäumungsmittel in einer Menge von 0,5 bis 2 Gew.-% (bezogen auf das Gesamtgewicht der jeweiligen PU-Dispersion). Verdickungsmittel, z.B. auf Acronalbasis (Wesopret A2), können der jeweiligen PU-Dispersion bzw. der PU-Dispersionsmischung in einer Menge von 1 bis 4 Gew.-% (bezogen auf das Gesamtgewicht der jeweiligen PU-Dispersion) zugesetzt werden.

Der PU-Schlagschaum wird durch das Einrühren von Gas bzw. Luft mit an sich bekannten Rührwerken, ähnlich einem Rührer zur Herstellung von Schlagsahne oder Eischnee, gebildet.

Bei den eingesetzten PU-Dispersionen handelt es sich um wässrige PU-Dispersionen.

Die Messung bzw. Überprüfung des Erweichungspunktes erfolgt auf der Kofler-Bank.

Erfindungsgemäß werden besonders gute Verformungseigenschaften für die Gestaltung der Oberfläche und eine exzellente Verbindung zwischen der Trägerschicht 1 und der geschäumten Schicht 2 erzielt, wenn die PU-Dispersionsmischung 18 bis 52 Gew.-% einer PU-Dispersion in Form eines wärmeaktivierbaren Kontaktklebers enthält, der einen PU-Feststoffanteil von 40 bis 50 % besitzt und der wärmeaktivierbar ist und bereits bei einer Temperatur von 45 °C pastös und klebrig wird. Solche Produkte sind wärmeaktivierbare Dispersionskontaktkleber auf Polyurethanbasis, wie z.B. das Produkt Luphen der der Firma BASF. Nach dem Wirksamwerden eines Vernetzers, wie zum Beispiel das Produkt Aquaderm XL 80 der Firma Lanxess AG aus Köln, verliert die PU-Dispersionsmischung, welche vorzugsweise den wärmeaktivierbaren Kontaktkleber enthält, ihre thermoplastischen Eigenschaften nachdem die getrocknete, wasserfreie Schicht 2 aus PU-Schlagschaum beim Gestalten der Oberfläche mittels Hitze und Druck auf eine Temperatur von über 90 °C, vorzugsweise über 110 °C, gebracht worden ist. Dieser PU-Dispersion wird eine PU-Dispersion im Ausmaß von 39 bis 73 Gew.-% - bezogen auf das Gewicht der PU-Dispersionsmischung - zugemischt, deren Erweichungspunkt höher als 125 °C liegt.

Mit der Erfindung wird auch der bekannte Nachteil, dass mit PU-Dispersionen hergestellte Beschichtungen auf hydrophoben Trägern nur ungenügende Haftung bzw. Verbindung erlangen, behoben. Ein hydrophober Träger verhindert das Eindringen von PU-Dispersion, die in der Regel mehr als 40 % Wasser enthalten in die Oberfläche des Trägers. Dieser in der Lederbranche bekannte Nachteil von PU-Dispersionen zur Beschichtung wird erfindungsgemäß verbessert, weil der erfindungsgemäß eingesetzte PU-Schlagschaum nach seinem Trocknen beim Strukturieren sich wie ein wärmeaktivierbarer Kleber verhält, der unter Druck in feinste Vertiefungen der Matrize eindringt und in gleicher Weise auch in feinste Vertiefungen eines Trägers eindringen kann. Der PU-Schlagschaum verankert sich in dem Träger wie ein Schmelzkleber und verbessert die Haftung.

Die Erfindung wird im Folgenden anhand von Beispielen näher erläutert.

Für die Feststellung, ob eine PU-Dispersionsmischung bzw. ein damit hergestellter PU-Schlagschaum für die Strukturierung geeignet ist, erfolgt eine Prüfung der für das Heißprägen benötigten Eigenschaften wie Thermoplastizität, Klebrigkeit und Fließverhalten unter Wärme und Druck. Dies erfolgt derart, dass man eine Schicht mit einer Stärke von 1,0 mm aus einem getrockneten, noch nicht vernetzten PU-Schlagschaum ausbildet und diesen im Wärmeofen oder auf der Kofler-Bank bei einer Temperatur zwischen 90 °C und 145 °C bezüglich der genannten Eigenschaften beurteilt. Bei positivem Resultat wird diese Schicht aus PU-Schlagschaum in einer Presse mit einer mit der gewünschten Oberflächenstruktur versehenen Silikonkautschukmatrize, die eine Shore-A-Härte von 75 besitzt, bei Temperaturen zwischen 90 °C und 145 °C und Presszeiten zwischen 2 und 18 s verpresst. Bei diesen Temperaturen hat der PU-Schlagschaumfilm mehr oder weniger klebrig zu sein, darf aber nicht flüssig sein, muss die Matrize optimal abbilden und muss sich von der Matrize leicht ohne Verformung abziehen lassen ohne die ausgebildete Struktur zu verändern. In der Regel erfüllen die genannten handelsüblichen PU-Dispersionen dieses Erfordernis. Durch ein entsprechendes Mischungsverhältnis von derartigen handelsüblichen PU-Dispersionen können Anpassungen an unterschiedliche Anwendungszwecke bzw. unterschiedliche Oberflächenstrukturen und unterschiedliche Beanspruchungen vorgenommen werden und die Erweichungs- und Prägetemperatur eingestellt bzw. vorgegeben werden.

### BEISPIEL 1:

Die Narbenseite eines Rindsnarbenleders wurde mit Schleifpapierkörnung 180 um 0,5 mm abgeschliffen. Auf der geschliffenen Seite wurde zur Ausbildung der Schicht 2 ein PU-Schlagschaum in einer Stärke zwischen 0,090 und 0,110 mm mittels einer gegenläufigen Walze aufgebracht. Bei einer Temperatur von 110 °C und Umluft wurde der Wassergehalt im Verlauf von 2,5 Minuten auf 1,3 Gew.-% reduziert. Der PU-Schlagschaum nahm im Zuge der Trocknung lediglich um 0,01 mm in seiner Dicke ab.

Der Schlagschaum wurde erstellt aus 420 g PU-Dispersion mit wärmeaktivierbaren Kontaktklebereigenschaften mit einem Feststoffanteil von 40 %, 480 g Polyurethandispersion mit einem hohen Erweichungspunkt von über + 140 °C mit einer amorphen Struktur auf Polyesterbasis und einem Feststoffanteil von 40 %, 20 g Meliofoam-Paste, 30 g Verdicker, 50 g Pigment.

Die PU-Dispersionsmischung hatte nach dem Trocknen im Wärmeschrank einen Erweichungspunkt bzw. -bereich, der ein ausgezeichnetes Prägen zuließ bei einer Temperatur von 125 °C.

Diese Mischung besaß ein Volumen von 1,07 I und wurde mit einem handelsüblichen Schaumschläger auf ein Volumen von 1,35 I durch Einschlagen von Luft aufgeschlagen bzw. vergrößert. Der eine schlagsahneartige Konsistenz besitzende Schlagschaum wurde auf die geschliffene Seite des Narbenleders mit einer Stärke von 0,1 mm appliziert und getrocknet. Nach 4 Stunden erfolgte die Prägung, wobei der Wassergehalt des PU-Schlagschaums weniger als 1 Gew.-% betrug.

Die Prägung erfolgte mit einer Matrizentemperatur von 128 °C und einem Druck von 0,08 kg/cm². Der Druck wurde 7 Sekunden lang aufrecht erhalten.

Die Struktur des Trägers bzw. Leders war durch den Schlagschaum bzw. die Schicht 2 nicht sichtbar. Die Verbindung bzw. die Schichtausbildung erfolgte lunker- und blasenfrei; ein Einfallen trat nicht auf. Eine Dickenmessung ergab, dass der PU-Schlagschaum um etwa 8 bis 10 % dünner wurde.

Bei Ausbildung einer weiteren Schicht 3 auf der Schicht 2 aus PU-Schlagschaum, die, wie zuvor angegeben wurde, erstellt wurde, ergab sich eine Wasserdampfdurchlässigkeit von 0,8 mg/cm²/h. Um diese weitere Schicht 3 zu erstellen, wurde eine Schicht aus PU-Dispersionsmischung, die nicht geschäumt war, in einer Stärke von 0,025 mm auf die zur Strukturierung eingesetzte Matrize 4 aufgebracht und getrocknet. Bezogen auf ihr Gesamtgewicht wurde diese PU-Dispersionsmischung erstellt mit 60g PU-Dispersion auf Polycarbonatbasis mit einem Feststoffanteil von 32 Gew.-%. Eine getrocknete Schicht einer derartigen PU-Dispersion besitzt eine Shore-A-Härte von 75. Dazu gemengt wurden 20g PU-Dispersion auf Polyesterbasis mit einem Feststoffgehalt von 35 Gew.-% und einer Shore-A-Härte in getrocknetem Zustand von 65. Weiters enthielt diese PU-Dispersionsmischung 4g Vernetzer, 5g Pigmentpaste schwarz, 3g Polysiloxan sowie 1g Mattierungsmittel S100.

Diese PU-Dispersionsmischung mit den angegebenen Zusätzen wurde 10 Minuten vor dem Strukturiervorgang ungeschäumt auf die Matrize 4 aufgetragen. Es erfolgte eine Trocknung auf weniger als 1 % Wassergehalt. Die Verbindung dieser weiteren Schicht 3 mit der auf dem Träger 1 befindlichen - oben angegebenen - Schicht 2 aus PU-Schlagschaum erfolgte im Zuge der Kontaktierung der Schicht 2 mit der Matrize 4 bei der oben genannten Prägetemperatur und Prägedruck. Dabei wurde diese weitere Schicht 3 untrennbar mit der Schicht 2 aus PU-Schlagschaum verbunden.

Die sich ergebende hohe Haftung von PU-Dispersion-basierten Schichten bei hydrophoben Trägern, insbesondere bei hydrophobierten Ledern in Kombination mit der verbesserten Wasserdampfdurchlässigkeit ist vor allem für Sicherheitsschuhe der Klasse S2 und S3 Voraussetzung und wird mit dem erfindungsgemäßen Schichtmaterial ohne Weiteres erfüllt.

Es zeigte sich ferner, dass bei der Verwendung eines mit einem geschäumten Weich-PVC vorbeschichteten Träger es vorzuziehen ist, die Schicht aus PU-Schlagschaum nur mit PU-Dispersionen zu bereiten, die auf Polyester- oder auf Polycarbonatbasis basieren. Bei PU-Dispersionen auf Polyetherbasis könnte unter Umständen eine Weichmacherwanderung in den PU-Schlagschaum eintreten.

Als PU-Dispersionen zur Erstellung des PU-Schlagschaums für die Schichten 2 und 5 werden handelsübliche PU-Dispersionen eingesetzt. Diese handelsüblichen PU-Dispersionen basieren auf aliphatischen Polyester- bzw. Polyether- oder Polycarbonatpolyurethanen. Derartige PU-Dispersionen besitzen einen Feststoffanteil von 35 bis 52. Der pH-Wert derartiger PU-Dispersionen liegt zwischen 6,5 bis 8,5. Nach dem Wasserentzug bzw. der Trocknung besitzt der sich ausbildende Film eine Bruchdehnung zwischen 280 und 650 %. Diese PU-Dispersionen sind mit XL80 vernetzbar. Die Härte eines getrockneten und vernetzten ungeschäumten Filmes derartiger PU-Dispersionen besitzt eine Shore-A-Härte zwischen 35 und 95, bevorzugt werden 45 bis 85. Die gebildeten Schichten sind geruchsneutral und frei von unzulässigen Chemikalien.

Für die Erstellung der Matrizen 4 werden handelsübliche Silikonkautschukabformmassen verwendet, wobei die Matrizen eine Shore-A-Härte zwischen 40 und 85 besitzen. Die Dichte der Matrizen beträgt mehr als 1,150 g/cm³ und sind kondensations- oder additionsvernetzt. Die erstellten Matrizen sind mittels Laser oder mechanisch gravierbar.

### BEISPIEL 2:

Es wurde eine PU-Dispersionsmischung erstellt mit:
460g handelsüblicher PU-Kontaktkleberdispersion mit wärmeaktivierbaren Kontaktklebereigenschaften und mit einem Feststoffgehalt von 40 Gew.-%.
510g handelsüblicher PU-Dispersion basierend auf aliphatischem Polyether mit einem Feststoffanteil von 40 % mit einem Erweichungspunkt einer getrockneten Schicht (0,5 Gew.-% Wasser) von 155 °C,
6g Pigmentpaste schwarz,
4g Verdichter in Form von Polyacrylat,
2g Schaumpasta MELIO,
3g Vernetzter,
10g Polyacrylatdispersion mit einem Feststoffgehalt von 50 Gew.-%,
5g Mikrohohlkugeln mit einem Durchmesser von 20 µ

Damit ergab sich eine PU-Dispersionsmischung mit einem Gewicht von 1000 g, welche ein Volumen von 1,04 I einnimmt. Ein Liter einer derartigen PU-Dispersion wurde aufgeschlagen auf 1,34 l. Die aufgeschlagene PU-Dispersionsmischung besitzt eine hohe Viskosität und ist quasi thixotrop.

Es wurde eine Schicht von 0,13 mm mit einer gegenläufig angetriebenen Auftragswalze auf ein Mikrofaservlies aufgetragen und innerhalb von 3 Minuten in einem Umlufttrockner bei einer Temperatur von 115 °C auf 1,0 Gew.-% Wassergehalt getrocknet. Nach 3 Stunden wurden Schuhoberteile ausgestanzt und bei einer Temperatur von 120 °C und einem Druck von 0,05 kg/cm² 5 Sekunden lang mit einer oberflächenstrukturierten Silikonmatrize gepresst und strukturiert.

Die Stanzteile zeigen im Positiv exakt die Struktur der Negativmatrize, die das Aussehen von Känguruleder besaß. Die Schicht 2 hatte eine Dicke von 0,065 mm und die Haftung zwischen dem Träger und der Schicht 2 betrug 28 N/cm.

### BEISPIEL 3:

Auf ein Känguruleder mit geschliffenen Narben wurde ein PU-Schlagschaum entsprechend Beispiel 2 mittels einer Walze in einer Stärke von 0,09 mm aufgetragen und bei einer Temperatur von 95 °C auf 1 Gew.-% Wasser getrocknet. Danach wurden Schuhoberteilzuschnitte für Fußballschuhe herausgestanzt und, wie im Beispiel 2 angeführt, strukturiert. Die Dicke der Schicht 2 betrug 0,07 mm und die Haftung zwischen Träger 1 und der Schicht 2 betrug 16,5 N/cm.

### BEISPIEL 4:

Eine Mischung von PU-Dispersionen, jedoch in der Farbe weiß enthaltend 12 g Titanoxid, entsprechend Beispiel 2 wurde aufgeschäumt und der PU-Schlagschaum wurde zur Ausbildung der Schicht 2 airless in einer Stärke von 0,12 mm auf ein Mikrofaservlies aufgebracht und bei einer Temperatur von 120 °C 3 Minuten lang auf weniger 1 Gew.-% Wasser getrocknet. Danach werden Schuhoberteile herausgestanzt. Auf eine Matrize mit einer Negativ-Veloursstrukturierung wurde eine 0,040 mm starke nicht geschäumte PU-Dispersion aufgetragen. Der Feststoffgehalt dieser Dispersion betrug 30 Gew.-%. Des Weiteren enthielt diese Dispersion 5 Gew.-% rote Pigmentpaste. Die Stärke dieser Schicht betrug nach dem Trocknen auf 0,5 Gew.-% Wassergehalt 0,018 mm. Die Stanzteile wurden auf die Schicht 3 auf der Matrize 4 gelegt und, wie in Beispiel 2 beschrieben, verpresst, wobei die Schichten 2 und 3 untrennbar miteinander verbunden wurden.

### BEISPIEL 5:

Ein Träger aus textilem Material wurde mit einem Weich-PVC-Schaum und ein anderer Träger aus textilem Material wurde mit PU-Schlagschaum als Bahnenmaterial vorbeschichtet mit einer Stärke von 0,30 mm entsprechend Beispiel 2 zur Ausbildung einer Schicht 2 beschichtet. Auf jeden dieser vorbeschichteten Träger wurde eine wärmestrukturierbare Schicht 2 aus PU-Schlagschaum mittel Rakel in einer Stärke zwischen 0,15 mm aufgebracht und auf einen Wassergehalt von weniger als 1 Gew.-% getrocknet. Auf diese Schicht 2 wurde eine ungeschäumte Schicht 3 einer PU-Dispersion in einer Stärke von 0,035 mm aufgebracht. Diese PU-Dispersion besaß einen Feststoffanteil von 30 Gew.-% und einen Gehalt eines Vernetzers im Ausmaß von 5 Gew.-%. Nach der Trocknung der Schicht 3 wurde der Zuschnitt bzw. wurden die Schichten 2 und 3 bei einer Temperatur von 145 °C strukturiert und miteinander mit der Schicht 5 fest verbunden.

Die Erfindung ist besonders vorteilhaft zur Herstellung von Format- und Schnittteilen, z.B. für Sicherheitsschuhe oder Lenkräder. Es ergibt sich eine vollflächige gute Verbindung zwischen dem jeweiligen Trägermaterial 1 und der Schicht 2. Gleichzeitig ergibt sich eine Temperaturbeständigkeit bis zu mindestens + 125 °C. Es wird die Forderung erfüllt, dass bis zu diesen Temperaturen eine Lagerung von 24 Stunden erfolgen kann, wobei die Struktur der Oberfläche, deren Farbe sowie der Glanzgrad bzw. eine vorgesehene Mattigkeit sich nicht verändern darf. Extreme Anforderungen treten bei der Abformung von Matrizen auf, welche eine Oberflächenstruktur besitzen, die durch Abformen eines Gewebes aus Stofffasern erhalten wurden oder bei der Abformung von Oberflächen von Kohlenstofffasergeweben. Die auf die Schicht 2 abgeformte Struktur entspricht exakt der Matrixstruktur in ihrer Dreidimensionalität sowie Glanzgrad und Mattigkeit. Besonders gut wird eine exakte dreidimensionale Abbildung erreicht, wenn auf die Matrix 4 vor der Aufbringung der Schicht 2 eine dünne PU-Dispersion in der Stärke von 0,025 bis 0,06 mm aus einer vernetzen PU-Dispersion mit einem Erweichungspunkt von mehr als +125 °C aufgebracht wird. Diese Dispersion enthält aliphatischen Polyester und hat eine Härte nach einer Vernetzung von mehr als 75 Shore-A. Eine derartige PU-Dispersion enthält einen Feststoffanteil zwischen 25 und 32 Gew.-% und als Zuschlag 3 % Vernetzer, 6 Gew.-% Pigmente, 3 Gew.-% Polysiloxan, 0,5 Gew.-% Mattierungsmittel. Auf die getrocknete PU-Schicht 2 wird diese Schicht 3 in der bereits beschriebenen Weise aufgebracht.

Für Schichtmaterial in Form von Bahnenware insbesondere mit einem textilen Träger aus Gewebe oder Gewirke erfolgt eine Vorbeschichtung mit einer Schicht 5 aus geschäumten Weich-PVC oder einem vernetzbaren PU-Schlagschaum. Es ist dabei vorteilhaft, die Schlagschaumschicht 2 mittels Rakel auf die Schicht 5 aufgetragen. Nach dem trocknen dieser Schicht wird auf diese die Schicht 3, vorzugsweise mit einer Druckwalze aufgebracht. Die Trocknung der aufgebrachten PU-Schicht 2 und 3 erfolgt auf dem bahnenförmigen Träger 1 mit der Schicht 5 im Durchlauftrockner. Bei der Strukturierung wird derart vorgegangen, dass die Schicht 3 und die Schicht 2 aus PU-Schlagschaum mittels Infrarotstrahlern auf eine Temperatur zwischen 145 und 165 °C gebracht werden und mittels einer strukturierten Walze unter Druck geprägt werden. Dabei ergibt sich der Vorteil, dass die wärmestabilere Schicht 3 ein Ankleben der Schicht 2 aus PU-Schlagschaum an einer nicht aufgeheizten Strukturierwalze verhindert.

Die Prägegeschwindigkeit ist abhängig von der Art der Strukturierung, insbesondere von der Narbentiefe, und beträgt 5 bis 55 s/m des Schichtmaterials.

Bei einem mit Weich-PVC vorbeschichteten Träger 1 ist es von Vorteil, die Temperatur und/oder die Prägegeschwindigkeit und/oder der Druck so zu wählen, dass die PVC-Schicht zumindest leicht mitstrukturiert wird, wobei diese Schicht 5 ähnlich wie die Schicht 2 aus PU-Schlagschaum bezüglich ihrer Dicke abnimmt.

Es zeigte sich, dass es für die Strukturierung des PU-Schlagschaums der Schicht 2 von Vorteil ist, wenn beim Strukturieren eine Druckbeaufschlagung von mindestens 6 g/cm², vorzugsweise von mindestens 12 g/cm², erfolgt. Des Weiteren soll der PU-Schlagschaum für die Strukturierung nicht dünnflüssig sondern pastös und unter Druck leicht formbar sein, um die feinen Strukturen der Matrize abbilden zu können; dies unabhängig davon, ob es sich um bahnenförmiges Schichtmaterial oder um Schichtmaterial in Form von Formatteilen oder von Zuschnitten handelt.

Eine vorteilhafte Konsistenz des PU-Schlagschaums der Schicht 2 liegt dann vor, wenn der PU-Schlagschaum eine ähnliche Schmelzviskosität besitzt wie Weich-PVC bei einer Temperatur zwischen 160 bis 180 °C, also unter Druck fließfähig und umformbar ist. Dies gilt auch dann, wenn vor der Strukturierung der Schicht 2 noch eine weitere Schicht 3 auf diese Schicht 2 aufgebracht wird.

Die Ausbildung eines entsprechenden Erweichungsgrades bzw. einer gewünschten Verformungskonsistenz kann auch über die Menge des eingesetzten Vernetzers gesteuert werden und/oder über das Mischungsverhältnis von PU-Dispersionen mit niedrigen bzw. höherem Erweichungspunkt bzw. Erweichungsbereich.

Mattierungsmittel, insbesondere das für die Schichten 2 und 3 verwendete Mattierungsmittel TS100 der Firma Evonik Degussa GmbH, verbessern die Haptik, führen zu einem trockenen Griff und verbessern die Wasserdampfdurchlässigkeit.

Die Trocknung der Schicht 2 erfolgt unter Wärme im Trockner bzw. Durchlauftrockner. Eine Schicht aus PU-Schlagschaum im erfindungsgemäß vorgesehenen Dichtebereich unter Zehntel Millimetern benötigt zur Trocknung auf Wasserfreiheit bei 80 bis 120 °C je nach Zusammensetzung der Dispersion 2 bis 6 Minuten. Es zeigte sich, dass ein nasser Schlagschaum mit einer Stärke von 0,5 mm getrocknet in einem Wärmekanal oder Wärmeofen mit Umluft und einer Temperatur von + 120°C in 4,5 Minuten absolut wasserfrei und trocken ist. Bei gleicher Temperatur und in einer Zeit von 1,5 bis 2,5 Minuten enthält die Schicht aus PU-Schlagschaum weniger als 1,5 Gew.-% Wasser.

Vorteilhaft ist eine möglichst weitgehende Trocknung, vorzugsweise auf Wasserfreiheit. Die erforderliche Temperatur und die erforderliche Verweilzeit sind empirisch einfach festzustellen. Da der Wassergehalt von PU-Dispersionen bzw. des PU-Schlagschaums genau bekannt ist, kann z.B. auch durch Wägung festgestellt werden, wie viel Wasser beim Trocknen bereits verdampft ist. Des Weiteren erkennt man Wasserfreiheit, wenn beim Strukturieren kein störender Wasserdampf ausdampft.

Zur Ermittlung des Wassergehaltes in der getrockneten PU-Dispersion bzw. PU-Dispersionsmischung bei Wärmeeinwirkung kann auch festgestellt werden, wie groß der Restwassergehalt nach gewissen unterschiedlichen Verweilzeiten ist. Es ist somit einfach möglich, einen gewünschten Restwassergehalt zu erreichen bzw. die erforderliche Temperatur und Verweilzeit dafür festzulegen. Auch Wasserfreiheit kann auf diese Weise erreicht werden bzw. damit können für die Fertigung die erforderlichen Parameter festgelegt werden. Vorteilhafterweise wird das Wasser völlig bzw. nahezu vollständig entfernt.

Um für bestimmte Anwendungsfälle, z.B. bei Schuhen, die Wirkung von Farbpigmenten nicht zu beeinträchtigen durch das Aufschlagen der PU-Dispersionen, kann vorgesehen werden, dass die Schicht 2 im Zuge der Strukturierung unter Druck und Wärme auf eine gewisse Dicke reduziert wird. Dazu wird mit derselben PU-Dispersion, die für den PU-Schlagschaum der Schicht 2 verwendet wurde, eine im Gewicht gleiche Menge auf dieselbe Fläche, wie sie für den Schlagschaum vorgesehen wurde, aufgetragen und die Dicke dieser Vergleichsschicht feststellt. Die Schicht 2 wird auf einen Dickenwert bei der Strukturierung komprimiert, der die Dicke dieser Vergleichsschicht um 2 bis 18 %, vorzugsweise 3 bis 9 %, übersteigt.

Die Reduktion der Dicke der Schicht 2 kommt vor allem für geschliffene Narbenleder und Träger 1 aus Mikrofaservlies in Frage, aus denen Format- bzw. Stanzteile für Schuhe erstellt werden, die oberflächlich strukturiert werden sollen. Es wird die Schicht 2 verdichtet, womit die Belastbarkeit, Abriebfestigkeit und das Biegeverhalten der Schicht 2 verbessert werden. Ferner wird der beim Aufschäumen des PU-Schlagschaums eintretenden Aufhellung des Schaums bzw. der Schicht 2 aufgrund der Vergrößerung des Volumens bei gleichbleibender Menge an Farbstoffen bzw. Pigmenten entgegengewirkt und Farbintensität und Farbhomogenität gewährleistet.

Die Gestaltung der Oberfläche mittels Wärme und Druck und einer Negativmatrize oder Präge- bzw. Negativwalze kann auch im Vakuumverfahren, also mittels Unterdruckverfahren, erfolgen. Beispielsweise können dazu poröse Prägewalzen oder poröse Matrizen eingesetzt werden, oder der Hohlraum zwischen den Pressplatten wird evakuiert. Derartige Pressverfahren unter Anwendung von Unterdruck bzw. Vakuum sind bekannt.

Beim Strukturieren des PU-Schlagschaums bzw. der Schicht 2 ist es erfindungsgemäß möglich, auf die Matrize 4 und/oder auf die Schicht 2 Verstärkungs- und/oder Formteile aufzulegen. Bei dem unter Druck und bei erhöhter Temperatur stattfindendem Pressvorgang werden diese Teile fest mit der Schicht 2 und der allenfalls vorhandenen Schicht 3 verbunden. Diese Verstärkungs- bzw. Formteile können beliebig gestaltet werden und die Form von Streifen, Kreisen, Sternen, geometrischen oder anderen Figuren usw. besitzen. Als Materialien kommen vor allem Kunststoff bzw. alle für den Träger 1 einsetzbaren Materialien in Frage, insbesondere in Form von Folien bzw. dünnen Form- bzw. Stanzteilen.

Besonders vorteilhafte Werte für die Schicht 2 ergeben sich, wenn der PU-Schlagschaum mit einer Dicke von 0,070 bis 0,250 mm auf den Träger 1 aufgebraucht wird.

## Patentansprüche

1. Verfahren zur Herstellung eines Schichtmaterials, das eine Trägerschicht (1) und eine mit dieser verbundene Schicht (2) aus Polyurethan aufweist, wobei als Trägerschicht (1) ein Leder, vorzugsweise ein geschliffenes Narbenleder, vorzugsweise ein Rinds-Spaltleder, ein Textilmaterial, vorzugsweise ein Gewebe oder ein Gewirke, ein Lederfaserwerkstoff oder ein Mikrofaservlies, eingesetzt und mit der Schicht (2) verbunden wird, wobei auf die Trägerschicht (1) als Schicht (2) zumindest eine, vorzugsweise eine einzige, Schicht aus PU-Schlagschaum aufgebracht wird, **dadurch gekennzeichnet,**
- **dass** der PU-Schlagschaum mit einer PU-Dispersionsmischung erstellt wird, wobei die einzelnen zur Erstellung der PU-Dispersionsmischung eingesetzten PU-Dispersionen in getrocknetem Zustand unterschiedliche Erweichungspunkte zeigen,
- **dass** zur Erstellung der PU-Dispersionsmischung eine PU-Dispersion mit wärmeaktivierbaren Kontaktklebereigenschaften bzw. mit einem Erweichungspunkt in getrocknetem Zustand ab 40 °C, vorzugsweise ab 45 °C, im Ausmaß von 18 bis 52 Gew.-% der fertigen PU-Dispersionsmischung und eine PU-Dispersion ohne Kontraktklebereigenschaften bzw. mit einem Erweichungspunkt höher als 95 °C, vorzugsweise höher als 125 °C, im Ausmaß von 39 bis 73 Gew.-% der fertigen PU-Dispersionsmischung vermischt werden,
- **dass** die Schicht (2) mit einer Dicke von 0,030 bis 0,60 mm, vorzugsweise 0,035 bis 0,45 mm, auf die Trägerschicht (1) aufgebracht wird, und
- entweder, dass vor einer oder gleichzeitig mit einer Strukturierung des PU-Schlagschaums mit einer Matrize (4) aus Silikonkautschuk auf die Schicht (2) direkt oder durch vorangehendes Aufbringen auf die Matrize (4) eine weitere Schicht (3) aus einer nicht geschäumten PU-Dispersion aufgebracht und verfestigt wird, wobei aus einem großflächigen, mit PU-Schlagschaum beschichteten Schichtmaterial Kleinformatteile bzw. Stanzteile herausgetrennt und geprägt oder, nachdem der PU-Schlagschaum getrocknet ist, vor einer Weiterverarbeitung das Schichtmaterial zu Zuschnitten gestanzt wird und die Zuschnitte sodann unabhängig voneinander einer Prägung bzw. Oberflächenstrukturierung unter Druck und Temperatur unterzogen werden,
- oder, dass auf die Schicht (2) aus PU-Schlagschaum vor ihrer Strukturierung eine weitere Schicht (3) aus einer nicht geschäumten PU-Dispersion oder PU-Dispersionsmischung aufgetragen wird, und bei der Strukturierung einer bahnenförmigen Trägerschicht (1) die Schicht (3) und die Schicht (2) aus PU-Schlagschaum mittels Infrarotstrahlern auf eine Temperatur zwischen 145 und 165 °C gebracht werden und mittels einer, vorzugsweise mit Silikonkautschuk belegten, strukturierten Prägewalze (10) unter Druck geprägt werden.

2. Verfahren nach Anspruch 1, **dadurch gekennzeichnet,**
- **dass** die Schicht (2) nach ihrem Aufbringen auf die Trägerschicht (1) auf einen Wassergehalt von weniger als 1,5 Gew.-%, vorzugsweise weniger als 0,5 Gew.-%, insbesondere bis zur Wasserfreiheit, getrocknet wird, und/oder
- **dass** zur Erstellung des PU-Schlagschaums eine wässrige PU-Dispersionsmischung auf Basis von aliphatischem Polyether- und/oder Polyester- und/oder Polycarbonatpolyurethan eingesetzt wird, und/oder
- **dass** die PU-Dispersionen so gewählt werden, dass die PU-Dispersionsmischung nach dem Trocknen und vor ihrem Vernetzen thermoplastische Eigenschaften besitzt bzw. der PU-Schlagschaum thermoplastisch oberflächenstrukturierbar ist, und/oder
- **dass** die zur Bildung des PU-Schlagschaums eingesetzte PU-Dispersionsmischung 65 bis 91 Gew.-% - bezogen auf das Gewicht der PU-Dispersionsmischung - PU-Dispersionen enthält, wobei die für die Bildung des PU-Schlagschaums eingesetzten PU-Dispersionen jeweils 35 bis 52 Gew.-%, bezogen auf das Gewicht der jeweiligen PU-Dispersion, Feststoff enthalten, und/oder
- **dass** das Polyurethan der eingesetzten PU-Dispersionen zumindest teilweise lineare und/oder zumindest teilkristalline und/oder thermoplastische oder amorphe Struktur besitzt.

3. Verfahren nach Anspruch 1 oder 2, **dadurch gekennzeichnet, dass** der PU-Schlagschaum erstellt wird, indem in die PU-Dispersion oder die PU-Dispersionsmischung ein Gas bzw. Gasbläschen, vorzugsweise Luft oder Stickstoff, eingebracht wird, wobei in einen Liter der PU -Dispersion oder PU-Dispersionsmischung so viel Gas eingebracht bzw. eingeschlagen wird, dass ein Liter ein Volumen von 1,10 bis 1,70 l, vorzugsweise 1,20 bis 1,50 l, annimmt.

4. Verfahren nach einem der Ansprüche 1 bis 3, **dadurch gekennzeichnet,**
- **dass** der PU-Schlagschaum auf die Trägerschicht (1), insbesondere airless, aufgesprüht oder im Siebdruckverfahren oder mit zumindest einer Walze oder einer Rakel in gleicher Dicke aufgebracht wird, und/oder
- **dass** bei Einsatz eines Mikrofaservlieses als Trägerschicht (1) die Zwischenräume zwischen den Fasern des Vlies mit koaguliertem oder geschäumtem Kunststoffschaum, vorzugsweise auf Polyurethanbasis, zumindest teilweise gefüllt sind.

5. Verfahren nach einem der Ansprüche 1 bis 4, **dadurch gekennzeichnet, dass** vor der Strukturierung der Oberfläche der Schicht (2) aus PU-Schlagschaum auf die strukturgebende Matrize (4) die weitere Schicht (3) aus einer ungeschäumten PU-Dispersion in einer Stärke von 0,015 bis 0,060 mm, vorzugsweise 0,025 bis 0,045 mm, ausgebildet wird, die maximal 1,5 Gew.-%, vorzugsweise maximal 0,5 Gew. %, Wasser enthält, insbesondere wasserfrei getrocknet ist, zumindest bis zu einer Temperatur von 110 °C keine Klebeeigenschaften besitzt und soweit verfestigt und/oder vernetzt ist, dass sie von der strukturierten Matrize (4) ohne Klebenbleiben abziehbar ist, und dass diese auf der auf eine Temperatur von 90 bis 145 °C erwärmte Matrize (4) befindliche Schicht (3) mit der Schicht (2) in Kontakt gebracht und mit dieser Schicht (2) im Zuge der Strukturierung druckbeaufschlagt und verbunden wird, wobei vorteilhafterweise diese Schicht (3) nach dem Strukturieren eine Shore-A-Härte von 55 bis 95 besitzt und gegebenenfalls eine andere Farbe als die Schicht (2) aufweist.

6. Verfahren nach einem der Ansprüche 1 bis 4, **dadurch gekennzeichnet, dass** auf die Schicht (2) die weitere Schicht (3) aufgebracht wird, indem vor der Strukturierung der Schicht (2) mit einer Matrize (4) direkt die weitere Schicht (3) aus einer, gegebenenfalls eine unterschiedliche, vorzugsweise größere, Härte und/oder Farbe besitzende, PU-Dispersion auf die Schicht (2) aufgebracht bzw. an diese angebunden wird, wobei die weitere Schicht (3) von einer ungeschäumten PU-Dispersion gebildet ist und in einer Stärke von 0,015 bis 0,060 mm, vorzugsweise 0,025 bis 0,045 mm, aufgebracht wird, und gegebenenfalls auf einen Wassergehalt von maximal 1,5 Gew.-%, vorzugsweise maximal 0,5 Gew. %, Wasser, insbesondere Wasserfreiheit, getrocknet wird.

7. Verfahren nach einem der Ansprüche 1 bis 6, **dadurch gekennzeichnet,**
- **dass** zur Erstellung eines oberflächenstrukturierten Schichtmaterials die getrocknete Schicht (2), gegebenenfalls gleichzeitig bzw. gemeinsam mit der weiteren Schicht (3), mit einer strukturierten Matrize (4) oder mit einer Prägewalze (10) druckbeaufschlagt und gegebenenfalls dickenreduziert wird, die eine Temperatur von 110 bis 155 °C besitzt, wobei für eine erwärmte Matrize (4) eine Kontaktdauer von 2 bis 18 s und ein Kontaktdruck von 0,04 bis 1,8 kg/cm² eingehalten wird, oder die Schicht (2), gegebenenfalls gleichzeitig bzw. gemeinsam mit der Schicht (3), auf eine Temperatur von 110 bis 155 °C, z.B. mit IR-Strahlung, gebracht und mit einer kalten oder maximal auf 75 °C erwärmten Matrize (4) oder Prägewalze (10) druckbeaufschlagt und strukturiert und gegebenenfalls dickenreduziert wird, und/oder
- **dass** die Dicke der Schicht (2) aus aufgeschlagenem PU-Schlagschaum im Zuge des Aufbringen der Oberflächenstruktur bzw. Prägens bei der vorgegebenen Temperatur und dem vorgegebenen Druck reduziert wird und dabei die Dicke der Schicht (2) derart bemessen wird, dass sie um 2 bis 18%, vorzugsweise 3 bis 9 %, dicker bleibt als eine Vergleichsschicht, die aus einer gleich großen Menge an nicht aufgeschäumter PU-Dispersion oder nicht aufgeschäumter PU-Dispersionsmischung derselben Zusammensetzung hergestellt und über dieselbe Fläche wie der PU-Schlagschaum verteilt wurde, und/oder
- **dass** die Prägung mit einer oberflächenstrukturierten Matrize aus Silikonkautschukmasse mit einer Shore-A-Härte von 40 bis 85 vorgenommen wird.

8. Verfahren nach einem der Ansprüche 1 bis 7, **dadurch gekennzeichnet,**
- **dass** der PU-Dispersion oder PU-Dispersionsmischung Zusätze, vorzugsweise gasgefüllte Mikrohohlkugeln und/oder Pigmente und/oder Polyacrylatdispersionen und/oder Silikone und/oder Mattierungsmittel und/oder Verdickungsmittel und/oder Vernetzer und/oder Schäumhilfsmittel und/oder flammhemmende Mittel, zugesetzt werden, und/oder
- **dass** der PU-Schlagschaum derart wärme- und druckbeaufschlagt wird, dass die Schicht (2) nach der Strukturierung mit der Matrize (4) eine Dichte von 0,80 bis 1,030 kg/dm³, vorzugsweise 0,810 bis 0,970 kg/dm³, besitzt, und/oder
- **dass** 8 bis 25 Gew.-%, bezogen auf das Gesamtgewicht des PU-Schlagschaums, einer 40 bis 60 %-igen Acrylatdispersion zugesetzt werden, und/oder
- **dass** für die Erstellung des PU-Schlagschaums PU-Dispersionen oder PU-Dispersionsmischungen eingesetzt werden, bei denen nach einem Trockenvorgang eine trockene Schicht des damit hergestellten PU-Schlagschaums mit einer Fläche von 1 m² und einer Dicke von 1,0 mm vor Ihrer Strukturierung 0,78 bis 1,03 kg wiegt.

9. Verfahren nach einem der Ansprüche 1 bis 8, **dadurch gekennzeichnet, dass** vor Aufbringen der Schicht (2) aus PU-Schlagschaum auf eine von einem Textilmaterial, z.B. Gewebe oder Gewirke, gebildeten Trägerschicht (1) auf die Oberfläche des Textilmaterials eine dünne Lage (5) aus gegebenenfalls geschäumtem Weich-PVC oder aus einer geschäumten oder nicht geschäumten vernetzbaren PU-Dispersion oder einer nicht geschäumten vernetzbaren PU-Dispersionsmischung, vorzugsweise aus aliphatischem Polyurethan auf Polyester- oder Polyetherbasis mit einem PU-Feststoffgehalt von 20 bis 35 Gew.-%, aufgebracht wird und eine Verbindungsschicht für die aufzubringende Schicht (2) aus PU-Schlagschaum darstellt.

10. Schichtmaterial umfassend eine Trägerschicht (1) und eine mit dieser verbundene oberflächenstrukturierbare Schicht (2) aus Polyurethan, wobei die Trägerschicht (1) ein Leder, vorzugsweise Narbenleder, insbesondere geschliffenes Narbenleder, vorzugsweise ein Rinds-Spaltleder, ein Textilmaterial, vorzugsweise ein Gewebe oder ein Gewirke, ein Lederfaserwerkstoff oder ein Mikrofaservlies ist, hergestellt nach einem Verfahren nach einem der Ansprüche 1 bis 9, **dadurch gekennzeichnet, dass** die Schicht (2) von zumindest einer, vorzugsweise einer einzigen, Schicht eines nicht vernetzten oder noch nicht vernetzten oder schwach untervernetzten, PU-Schlagschaums gebildet ist, der gegebenenfalls einen maximalen Wassergehalt von 1,5 Gew.-%, vorzugsweise 0,5 Gew.-%, aufweist, insbesondere wasserfrei ist, wobei die Schicht (2) einen Erweichungspunkt oberhalb 90 °C besitzt und bei einer Temperatur von 90 bis 145 °C klebrig ist, thermoplastische Eigenschaften besitzt und unter Druck fließfähig ist bzw. sich bleibend verformen lässt und nach einer unter Druck und Temperatur erfolgenden Strukturierung und Vernetzung ihre Klebrigkeit verliert und thermoplastisch ist, wobei eine weitere Schicht (3) aus einer nicht geschäumten PU-Dispersion auf die Schicht (2) aufgebracht ist.

11. Schichtmaterial nach Anspruch 10, **dadurch gekennzeichnet,**
- **dass** der PU-Schlagschaum der Schicht (2) ein spezifisches Gewicht von 0,8 bis 1,03 kg/dm³ aufweist, und/oder
- **dass** die Schicht (2) aus PU-Schlagschaum eine Dicke von 0,030 bis 0,40 mm, vorzugsweise 0,070 bis 0,350 mm, aufweist, und/oder
- **dass** die für die Schicht (2) eingesetzte Polyurethane aliphatische Polyurethane auf Polyether- oder Polyester- oder Polycarbonatbasis sind, und/oder
- **dass** die Schicht (2) aus PU-Schlagschaum Pigmente und/oder Vernetzer und/oder Polyacrylate und/oder Mikrohohlkugeln und/oder Mattierungsmittel enthält, und/oder
- **dass** die Schicht (2) aus verfestigtem, getrocknetem PU-Schlagschaum eine Shore-A-Härte von 28 bis 68 aufweist.

12. Schichtmaterial nach Anspruch 10 oder 11, **dadurch gekennzeichnet, dass** bei einer von einem Textilmaterial gebildeten Trägerschicht (1) zwischen dem Textilmaterial und der Schicht (2) eine dünne Lage (5) aus geschäumten Weich-PVC oder aus einer vernetzten Schlagschaumschicht aus einer PU-Dispersion ausgebildet ist, welche Lage (5) eine Dicke von 0,25 bis 0,45 mm besitzt und eine Verbindungsschicht für die aufzubringende Schicht (2) aus PU-Schlagschaum darstellt, wobei gegebenenfalls die beiden Schichten (2, 5) eine Gesamtdicke von 0,3 bis 0,5 mm ausbilden.

13. Schichtmaterial nach einem der Ansprüche 10 bis 12, **dadurch gekennzeichnet, dass** auf die Schicht (2) eine dünne wärmestrukturierbare, nicht geschäumte Schicht (3) aus einer PU-Dispersion oder PU-Dispersionsmischung mit einer Dicke von 0,0150 bis 0,60 mm, vorzugsweise 0,020 bis 0,0350 mm, aufgebracht bzw. an die Schicht (2) angebunden ist, wobei in der Schicht (2) aus PU-Schlagschaum eine der Strukturprägung in der Schicht (3) entsprechende Struktur ausgebildet bzw. eingeprägt ist, und wobei die Schicht (3) vorteilhafterweise eine größere Shore-A-Härte als die Schicht (2) bzw. eine Härte von mehr als 70 Shore-A aufweist und gegebenenfalls 1 bis 4 Gew.-% Polysiloxane enthält.

14. Schichtmaterial nach einem der Ansprüche 10 bis 13, **dadurch gekennzeichnet,**
- **dass** das Narbenleder ein vollnarbiges Rindleder, vorzugsweise Rinds-Spaltleder, Kalbleder, Ziegenleder oder Känguruleder ist, bei welchem Leder die Narbenschicht vorteilhafterweise um mindestens 5 % bis maximal 60 % mechanisch entfernt ist, und/oder
- **dass** die Fasern des Mikrofaservlies aus Polyester oder Polyamid bestehen, wobei die Hohlräume zwischen den Fasern mit einem Kunststoff, vorzugsweise auf Polyurethan- oder Polyesterbasis, imprägniert bzw. gefüllt sind, der eine Schaumstruktur oder eine koagulierte Mikrozellenstruktur aufweist, und/oder
- **dass** der PU-Schlagschaum eine offenzellige Struktur besitzt und/oder luftdurchlässig ist und/oder eine Wasserdampfdurchlässigkeit von mehr als 0,50 mg/cm²/h, vorzugsweise von mehr als 0,12 mg/ cm²/h, gemäß DIN EN ISO 14268 aufweist.

15. Gegenstände hergestellt unter Verwendung eines Schichtmaterials gemäß einem der Ansprüche 10 bis 14, erhältlich nach einem Verfahren gemäß einem der Ansprüche 1 bis 9, wie Bahnenware, Zuschnitte, Stanzteile, Schuhteile, Sport- und Arbeitsschuhe, Schuheinlegesohlen, Taschen, Lederwaren, Lenkradbezüge, Polsterungsüberzüge, Innenwandverkleidungen und Sitzbezüge für Kraftfahrzeuge, wobei die Oberfläche der Gegenstände bzw. der oberflächenstrukturierbaren Schicht (2) eine Strukturprägung aufweist.

16. Gegenstände nach Anspruch 15, **dadurch gekennzeichnet, dass** die Schicht (2) und gegebenenfalls auch die mit der Schicht (2) verbundene bzw. die auf die Schicht (2) aufgetragene Schicht (3) thermoplastisch bzw. unter Anwendung von Wärme und Druck verformt bzw. strukturiert ist.

17. Gegenstände nach Anspruch 15 oder 16, **dadurch gekennzeichnet,**
- **dass** auf der Oberfläche der Schicht (2) eine Strukturierung ausgebildet bzw. eingeprägt ist, und/oder
- **dass** die Schicht (2) aus PU-Schlagschaum eine Dicke aufweist, die nur 2 bis 18%, vorzugsweise 3 bis 9%, dicker als eine Schicht ist, die aus einer gewichtsgleichen Menge aus einer ungeschäumten PU-Dispersion bzw. ungeschäumten PU-Dispersionsmischung derselben Zusammensetzung gebildet ist, nachdem diese Menge in Form einer Schicht über eine gleich große Fläche wie der PU-Schlagschaum in Form der Schicht (2) verteilt wurde.

## Claims

1. Method for producing a layered material which has a carrier layer (1) and a layer (2), connected thereto, of polyurethane, wherein as a carrier layer (1) a leather, preferably a sanded grain leather, preferably a cow split leather, a textile material, preferably a woven fabric or a knitted fabric, a leather fiber material or a microfiber non-woven, is used and connected to the layer (2), wherein on the carrier layer (1) is applied as a layer (2) at least one, preferably one single, layer made of PU impact foam, **characterised in**
- **that** the PU impact foam is generated with a PU dispersion mixture, wherein the individual PU dispersions employed for generating the PU dispersion mixture have different softening points in a dry state,
- **that** for generating the PU dispersion mixture, a PU dispersion with thermally activatable contact adhesion properties or with a softening point in a dry state from 40°C, preferably from 45°C, in the amount from 18 to 52 wt% of the finished PU dispersion mixture, and a PU dispersion without contact adhesive properties or with a softening point higher than 95°C, preferably higher than 125°C, in the amount from 39 to 73 wt% of the finished PU dispersion mixture are mixed,
- **that** the layer (2) is applied to the carrier layer (1) with a thickness from 0.030 to 0.60 mm, preferably 0.035 to 0.45 mm, and
- either, that prior to or simultaneously with a structuring of the PU impact foam using a die (4) made of silicone rubber onto the layer (2) directly or by means of previous application onto the die (4) a further layer (3) of a non-foamed PU dispersion is applied and solidified, wherein from an extensive layered material coated with PU impact foam, small-format parts or punched parts are separated out and embossed or, after the PU impact foam is dried, prior to a further processing layered material is punched out to form blanks and the blanks are then submitted independently from one another to an embossing or surface structuring under the impact of pressure and temperature,
- or, that prior to its structuring, a further layer (3) of a non-foamed PU dispersion or PU dispersion mixture is applied onto the layer (2) of PU impact foam, and during the structuring of a sheet-shaped carrier layer (1) the layer (3) and the layer (2) of PU impact foam is brought to a temperature of between 145 and 165°C by means of infrared radiators and are embossed under pressure by means of a structured embossing roller (10) which is preferably covered with silicone rubber.

2. Method according to claim 1, **characterised in that**
- after its application onto the carrier layer (1), the layer (2) is dried until it has a water content of less than 1.5 wt%, preferably less than 0.5 wt%, in particular until it is free of water, and/or
- for producing the PU impact foam, an aqueous PU dispersion mixture on the basis of aliphatic polyether polyurethane and/or polyester polyurethane and/or polycarbonate polyurethane is used, and/or
- that the PU dispersions are selected such that, after the drying and prior to its cross-linking, the PU dispersion mixture has thermoplastic properties or the PU impact foam can be surface structured in a thermoplastic manner, and/or
- that the PU dispersion mixture used for producing the PU impact foam contains 65 to 91 wt% PU dispersions in relation to the weight of the PU dispersion mixture, wherein the PU dispersions used for the production of the PU impact foam contain in each case 35 to 52 wt% solid material in relation to the weight of the respective PU dispersion, and/or
- that the polyurethane of the employed PU dispersions has at least in parts linear and/or at least partially crystalline and/or thermoplastic or amorphous structure.

3. Method according to claim 1 or 2, **characterised in that** the PU impact foam is created **in that** a gas or gas bubbles, preferably air or nitrogen, are introduced into the PU dispersion or the PU dispersion mixture, wherein so much gas is introduced into a liter of the PU dispersion or PU dispersion mixture that a liter assumes a volume of 1.10 to 1.70 I, preferably 1.20 to 1.50 l.

4. Method according to any of claims 1 to 3, **characterised in that**
- the PU impact foam is applied in an even thickness to the carrier layer (1) in particular airlessly, in a sprayed-on manner or in a screen-printing process or using at least one roller or a squeegee, and/or
- when using a microfiber non-woven as a carrier layer (1), interspaces between the fibers of the non-woven are at least partially filled with coagulated or foamed plastic foam, preferably on a polyurethane basis.

5. Method according to any of claims 1 to 4, **characterised in that** prior to the structuring of the surface of the layer (2) of polyurethane impact foam on the structuring die (4), the further layer (3) is formed from a non-foamed PU dispersion in a thickness from 0.015 to 0.060 mm, preferably 0.025 to 0.045 mm, which contains a maximum of 1.5 wt%, preferably maximum 0.5 wt% water, in particular is dried to be free of water, has no adhesive properties at least up to a temperature of 110°C, and is so far solidified and/or cross-linked that it can be drawn off from the structured die (4) without sticking, and that this layer (3) located on the die (4) heated to a temperature of 90 to 145°C is brought into contact with the layer (2) and is submitted to pressure and bonded with this layer (2) in the course of the structuring, wherein advantageously, after the structuring, this layer (3) has a Shore-A hardness of 55 to 95 and, where appropriate, has another color than the layer (2).

6. Method according to any of claims 1 to 4, **characterised in that** the further layer (3) is applied to the layer (2) **in that** prior to the structuring of the layer (2) using a die (4) directly, the further layer (3) made of a PU dispersion which, where appropriate, has a different, preferably greater hardness and/or different color, is applied or bonded to the layer (2), wherein the further layer (3) is formed of a non-foamed PU dispersion and is applied in a thickness of 0.015 to 0.060 mm, preferably 0.025 to 0.045 mm, and where appropriate is dried to give a water content of maximum 1.5 wt%, preferably maximum 0.5 wt%, in particular until it is free of water.

7. Method according to any of claims 1 to 6, **characterised in that**
- for generating a surface-structured layered material, pressure is applied, where appropriate in a thickness-reducing manner, to the dried layer (2), where appropriate simultaneously or together with the further layer (3), using a structured die (4) or an embossing roller (10), which has a temperature from 110 to 155°C, wherein for a heated die (4) a contact duration of 2 to 18 s and a contact pressure of 0.04 to 1.8 kg/cm2 is maintained, or the layer (2), where appropriate simultaneously or together with the layer (3) is brought up to a temperature of 110 to 155°C, e.g. with infrared radiation, and pressure is applied to it, and it is structured, and, where appropriate, reduced in thickness, using a die (4) or embossing roller (10) which is cold or heated to a maximum of 75°C, and/or
- in the course of the application of the surface structure or the embossing at the predetermined temperature and the predetermined pressure, the thickness of the layer (2) of beaten PU impact foam is reduced and thus the thickness of the layer (2) is dimensioned such that remains thicker by 2 to 18%, preferably 3 to 9% than a comparative layer which is produced from an equal quantity of non-foamed PU dispersion or non-foamed PU dispersion mixture of the same composition, and was distributed over the same surface as the PU impact foam, and/or
- the embossing is undertaken with a surface-structured die made of silicone rubber material with a Shore-A hardness of 40 to 85.

8. Method according to any of claims 1 to 7, **characterised in that**
- to the PU dispersion or PU dispersion mixture are added additives, preferably gas-filled microspheres and/or pigments and/or polyacrylate dispersions and/or silicons and/or matting agents and/or thickening agents and/or cross-linkers and/or foaming aids and/or flame-retardant means, and/or
- the PU impact foam is subjected to heat and pressure such that the layer (2), after the structuring using the die (4), has a density of 0.80 to 1.030 km/dm³, preferably 0.810 to 0.970 dm³, and/or
- 8 to 25 wt%, related to the total weight of the PU impact foam, of a 40 to 60% acrylate dispersion is added, and/or
- for the production of the PU impact foam, EU dispersions or PU dispersion mixtures are employed in which after a drying procedure a dry layer of the PU impact foam produce therewith, having an area of 1 m² and a thickness of 1.0 mm weighs 0.78 to 1.03 kg prior to its structuring.

9. Method according to any of claims 1 to 8, **characterised in that** prior to the application of the layer (2) of PU impact foam onto a carrier layer (1) formed from a textile fabric, e.g. woven or knitted fabric, a thin layer (5) of, where appropriate, foamed soft PVC or a foamed or non-foamed cross-linkable PU dispersion or a non-foamed cross-linkable PU dispersion mixture, preferably of aliphatic polyurethane on a polyester or polyether basis having a PU solid content of 20 to 35 wt%, is applied to the surface of the textile material and constitutes a connecting layer for the layer (2) of PU impact foam still to be applied.

10. Layered material comprising a carrier layer (1) and, connected thereto, a layer (2) of polyurethane having a structural surface, wherein the carrier layer (1) is a leather, preferably a sanded grain leather preferably a cow split leather, a textile material, preferably a woven fabric or a knitted fabric, a leather fiber material or a microfiber non-woven, produced according to a method according to any of claims 1 to 9, **characterised in that** the layer (2) is formed from at least one, preferably one single, layer of a non-cross-linked or not yet cross-linked or weakly under-cross-linked PU impact foam, which, where appropriate, has a maximum water content of 1.5 wt%, preferably 0.5 wt%, in particular is free from water, wherein the layer (2) has a softening point above 90°C and is sticky at a temperature of 90 to 145°C, has thermoplastic properties and, when under pressure, is free-flowing or allows itself to be permanently reshaped, and after a structuring and cross-linking under the influence of pressure and temperature loses its stickiness and is thermoplastic, wherein a further layer (3) of a non-foamed dispersion is applied onto the layer (2).

11. Layered material according to claim 10, **characterised in that**
- the PU impact foam of the layer has a specific weight of 0.8 to 1.03 km/dm³, and/or
- the layer (2) of PU impact foam has a thickness of 0.030 to 0.40 mm, preferably 0.070 to 0.350 mm, and/or
- the polyurethanes employed for the layer (2) are aliphatic polyurethanes on a polyether or polyester or polycarbonate basis, and/or
- the layer (2) of PU impact foam contains pigments and/or cross-linkers and/or polyacrylates and/or microspheres and/or matting means, and/or
- the layer (2) of hardened, dried PU impact foam has a Shore-A hardness of 28 to 68.

12. Layered material according to claim 10 or 11, **characterised in that** in the case of a carrier layer (1) formed from a textile fabric, between the textile fabric and the layer (2) is formed a thin layer (5) of foamed soft PVC or of a cross-linked impact foam layer made of a PU dispersion, which layer (5) has a thickness of 0.25 to 0.45 mm and constitutes a connecting layer for the layer (2) of PU impact foam which is to be applied, wherein, where appropriate, the two layers (2, 5) form a total thickness of 0.3 to 0.5 mm.

13. Layered material according to any of claims 10 to 12, **characterised in that** a thin heat-structurable, non-foamed layer (3) of a PU dispersion or PU dispersion mixture, having a thickness of 0.0150 to 0.60 mm, preferably 0.020 to 0.0350 mm, is applied or bonded to the layer (2), wherein in the layer (2) of PU impact foam a structure is formed or embossed corresponding to the structural embossing in the layer (3), and wherein the layer (3) advantageously has a greater Shore-A hardness than the layer (2), or a hardness of more than 70 Shore-A and, where appropriate, contains 1 to 4 wt% polysiloxanes.

14. Layered material according to any of claims 10 to 13, **characterised in that**
- the grain leather is a full-grain cow leather, preferably a cow split leather, calf leather, goat leather or kangaroo leather, in the case of which leather the grain layer is mechanically removed advantageously by at least 5% to maximum 60%, and/or
- the fibers of the microfiber non-woven consist of polyester or polyamide, wherein the cavities between the fibers are impregnated or filled with a plastic, preferably on polyurethane or polyester basis, which has a foam structure or a coagulated microcell structure, and/or
- the PU impact foam has an open cell structure and/or is air permeable and has a steam permeability of more than 0.50 mg/cm²/H, preferably of more than 0.12 mg/cm²/h, according to DIN EN ISO 14268.

15. Objects produced using a layered material according to any of claims 10 to 14, obtainable according to a method according to any of claims 1 to 9, such as for example meter-goods, blanks, punched parts, shoe parts, sport and working shoes, inlay soles for shoes, bags, leather goods, steering wheel covers, upholstery covers, inner wall claddings and seat covers for motor vehicles, wherein the surface of the objects or the surface-structurable layer (2) has a structural embossing.

16. Objects according to claim 15, **characterised in that** the layer (2) and, where appropriate, also the layer (3) applied or bonded to the layer (2) is deformed or structured thermoplastically or under the influence of heat and pressure.

17. Objects according to claim 15 or 16, **characterised in that**
- on the surface of the layer (2) is formed or embossed a structuring, and/or
- the layer (2) of the impact foam has a thickness which is only 2 to 18%, preferably 3 to 9%, thicker than a layer is formed from an equal weight quantity of a non-foamed dispersion non-foamed PU dispersion mixture of the same composition, after this quantity was distributed in the form of a layer across an equally large area as the impact foam in the form of the layer (2).

## Revendications

1. Procédé de fabrication d'un matériau de couche qui présente une couche de support (1) et une couche (2) en polyuréthane connectée à celle-ci, dans lequel un cuir, de préférence un cuir poncé, de préférence un cuir refendu de bovin, un matériau textile, de préférence un tissu tissé ou un tissu tricoté, un matériau à fibres de cuir ou un non-tissé à microfibres, est utilisé en tant que couche de support (1) et connecté à la couche (2), dans lequel au moins une, de préférence une seule, couche de mousse PU expansée est appliquée sur la couche de support (1) en tant que couche (2), **caractérisé en ce que**
- la mousse PU expansée est réalisée avec un mélange de dispersion PU, dans lequel les dispersions PU individuelles utilisées pour la réalisation du mélange de dispersion PU présentent différents points de ramollissement à l'état séché,
- pour la réalisation du mélange de dispersion PU, une dispersion PU est mélangée à des propriétés de collage par contact activables par la chaleur ou avec un point de ramollissement à l'état sec à partir de 40 °C, de préférence à partir de 45 °C, dans une proportion de 18 à 52 % en poids du mélange de dispersion PU fini et une dispersion PU sans propriétés de collage par contact ou avec un point de ramollissement supérieur à 95 °C, de préférence supérieur à 125 °C, dans une proportion de 39 à 73 % en poids du mélange de dispersion PU fini,
- la couche (2) est appliquée sur la couche de support (1) avec une épaisseur de 0,030 à 0,60 mm, de préférence de 0,035 à 0,45 mm, et
- soit avant, soit en même temps qu'une structuration de la mousse PU expansée avec une matrice (4) en caoutchouc de silicone, une couche (3) supplémentaire d'une dispersion PU non expansée est appliquée et consolidée sur la couche (2) directement ou par application préalable sur la matrice (4), dans lequel des pièces de petit format ou des pièces découpées sont séparées et gaufrées à partir d'un matériau de couche à grande surface revêtu de mousse PU expansée ou, après que la mousse PU expansée a séché, le matériau de couche est estampé en découpes avant un traitement ultérieur et les découpes sont ensuite soumises à un gaufrage indépendamment les unes des autres ou à une structuration en surface sous l'impact de pression et de température,
- ou une couche (3) supplémentaire d'une dispersion PU ou d'un mélange de dispersion PU non expansé est appliquée sur la couche (2) de mousse expansée PU avant sa structuration et, lors de la structuration d'une couche de support en forme de bande (1), la couche (3) et la couche (2) de mousse PU expansée sont portées à une température comprise entre 145 et 165 °C au moyen de radiateurs à infrarouge et sont gaufrées sous pression au moyen d'un cylindre de gaufrage (10) structuré, de préférence recouvert de caoutchouc de silicone.

2. Procédé selon la revendication 1, **caractérisé en ce que**
- la couche (2) est séchée après son application sur la couche de support (1) jusqu'à une teneur en eau inférieure à 1,5 % en poids, de préférence inférieure à 0,5 % en poids, en particulier jusqu'à l'absence d'eau, et/ou
- pour la réalisation de la mousse PU expansée, un mélange de dispersion PU aqueux à base de polyéther aliphatique et/ou de polyester et/ou de polycarbonate polyuréthane est utilisé, et/ou
- les dispersions PU sont sélectionnées de sorte que le mélange de dispersion PU présente des propriétés thermoplastiques après le séchage et avant sa réticulation ou la mousse PU expansée peut être structurée en surface de manière thermoplastique, et/ou
- le mélange de dispersion PU utilisé pour la formation de la mousse PU expansée contient 65 à 91 % en poids, par rapport au poids du mélange de dispersion PU, de dispersions PU, dans lequel les dispersions PU utilisées pour la formation de la mousse PU expansée contiennent respectivement 35 à 52 % en poids, par rapport au poids de la dispersion PU respective, de matière solide, et/ou
- le polyuréthane des dispersions PU utilisées présente une structure au moins partiellement linéaire et/ou au moins partiellement cristalline et/ou thermoplastique ou amorphe.

3. Procédé selon la revendication 1 ou 2, **caractérisé en ce que** la mousse PU expansée est réalisée **en ce qu'**un gaz ou des bulles de gaz, de préférence de l'air ou de l'azote, est introduit dans la dispersion PU ou le mélange de dispersion PU, dans lequel une quantité de gaz est introduite ou enfoncée dans un litre de la dispersion PU ou du mélange de dispersion PU telle qu'un litre prend un volume de 1,10 à 1,70 l, de préférence de 1,20 à 1,50 I.

4. Procédé selon l'une quelconque des revendications 1 à 3, **caractérisé en ce que**
- la mousse PU expansée est pulvérisée sur la couche de support (1), en particulier sans air, ou appliquée avec une épaisseur égale par sérigraphie ou avec au moins un rouleau ou un racloir, et/ou
- en cas d'utilisation d'un non-tissé à microfibres en tant que couche de support (1), les intervalles entre les fibres du non-tissé sont au moins partiellement remplis de mousse synthétique coagulée ou expansée, de préférence à base de polyuréthane.

5. Procédé selon l'une quelconque des revendications 1 à 4, **caractérisé en ce qu'**avant la structuration de la surface de la couche (2) de mousse PU expansée sur la matrice structurante (4), la couche (3) supplémentaire est formée à partir d'une dispersion PU non expansée d'une épaisseur de 0,015 à 0,060 mm, de préférence de 0,025 à 0,045 mm, qui contient au maximum 1,5 % en poids, de préférence au maximum 0,5 % en poids d'eau, en particulier séchée sans eau, ne présente aucune propriété adhésive au moins jusqu'à une température de 110 °C et est suffisamment solidifiée et/ou réticulée de sorte qu'elle peut être retirée de la matrice structurée (4) sans coller, et **en ce que** cette couche (3) se trouvant sur la matrice (4) chauffée à une température de 90 à 145 °C est mise en contact avec la couche (2) et est mise sous pression et connectée à cette couche (2) au cours de la structuration, dans lequel cette couche (3) présente avantageusement une dureté Shore A de 55 à 95 après la structuration et présente le cas échéant une autre couleur que celle de la couche (2).

6. Procédé selon l'une quelconque des revendications 1 à 4, **caractérisé en ce que** la couche (3) supplémentaire est appliquée sur la couche (2), **en ce qu'**avant la structuration de la couche (2) avec une matrice (4), la couche (3) supplémentaire constituée d'une dispersion PU, présentant le cas échéant une dureté différente, de préférence supérieure, et/ou une couleur différente, est appliquée directement sur la couche (2) ou liée à celle-ci, dans lequel la couche (3) supplémentaire est formée à partir d'une dispersion PU non expansée et est appliquée avec une épaisseur de 0,015 à 0,060 mm, de préférence de 0,025 à 0,045 mm, et est le cas échéant séchée jusqu'à ce qu'une teneur en eau de 1,5 % en poids maximum, de préférence de 0,5 % en poids maximum, d'eau soit atteinte, en particulier jusqu'à ce qu'elle soit dépourvue d'eau.

7. Procédé selon l'une quelconque des revendications 1 à 6, **caractérisé en ce que**
- pour la réalisation d'un matériau de couche à structuration en surface, la couche séchée (2) est soumise à une pression, et le cas échéant de manière à réduire l'épaisseur, le cas échéant en même temps ou conjointement avec la couche (3) supplémentaire, avec une matrice structurée (4) ou avec un rouleau de gaufrage (10) qui présente une température de 110 à 155 °C, dans lequel, une durée de contact de 2 à 18 s et une pression de contact de 0,04 à 1,8 kg/cm² sont respectées pour une matrice chauffée (4), ou la couche (2), le cas échéant en même temps ou conjointement avec la couche (3), est portée à une température de 110 à 155 °C, par ex. à l'aide d'un rayonnement IR, et est mise sous pression et structurée avec une matrice froide (4) ou un rouleau de gaufrage (10) chauffé à maximum 75 °C et, le cas échéant, réduite en épaisseur, et/ou
- l'épaisseur de la couche (2) de mousse PU expansée est réduite lors de l'application de la structure en surface ou du gaufrage à la température prédéterminée et à la pression prédéterminée et ainsi, l'épaisseur de la couche (2) est dimensionnée de sorte qu'elle reste plus épaisse de 2 à 18 %, de préférence de 3 à 9 %, qu'une couche de comparaison qui a été fabriquée à partir d'une même quantité de dispersion PU non expansée ou de mélange de dispersion PU non expansé de même composition et répartie sur la même surface que la mousse PU expansée, et/ou
- le gaufrage est réalisé avec une matrice à structuration en surface en masse de caoutchouc silicone avec une dureté Shore A de 40 à 85.

8. Procédé selon l'une quelconque des revendications 1 à 7, **caractérisé en ce que**
- des additifs sont ajoutés à la dispersion PU ou au mélange de dispersion PU, de préférence des microbilles creuses remplies de gaz et/ou des pigments et/ou des dispersions de polyacrylate et/ou des silicones et/ou des agents de matage et/ou des agents épaississants et/ou des agents de réticulation et/ou des agents auxiliaires de moussage et/ou des agents ignifuges, et/ou
- la mousse PU expansée est soumise à la chaleur et à la pression de sorte que la couche (2), après la structuration avec la matrice (4), présente une densité de 0,80 à 1,030 kg/dm³, de préférence de 0,810 à 0,970 kg/dm³, et/ou
- de 8 à 25 % en poids, par rapport au poids total de la mousse PU expansée, d'une dispersion d'acrylate à 40 à 60 %, est ajoutée, et/ou
- pour la réalisation de la mousse PU expansée, des dispersions PU ou des mélanges de dispersion PU sont utilisés, dans lesquels, après un processus de séchage, une couche sèche de la mousse PU expansée ainsi fabriquée, avec une surface de 1 m² et une épaisseur de 1,0 mm, pèse de 0,78 à 1,03 kg avant sa structuration.

9. Procédé selon l'une quelconque des revendications 1 à 8, **caractérisé en ce que,** avant l'application de la couche (2) de mousse PU expansée sur une couche de support (1) formée par un matériau textile, par ex. un tissu tissé ou un tissu tricoté, une couche mince (5) de PVC souple le cas échéant expansé ou d'une dispersion PU expansée ou non expansée réticulable ou d'un mélange de dispersion PU non expansé réticulable est appliquée sur la surface du matériau textile, de préférence en polyuréthane aliphatique à base de polyester ou de polyéther avec une teneur en matière solide PU de 20 à 35 % en poids, et constitue une couche de liaison pour la couche (2) en mousse PU expansée à appliquer.

10. Matériau de couche comprenant une couche de support (1) et une couche (2) en polyuréthane pouvant être structurée en surface et connectée à celle-ci, dans lequel la couche de support (1) est un cuir, de préférence un cuir fleur, en particulier un cuir poncé, de préférence un cuir refendu de bovin, un matériau textile, de préférence un tissu tissé ou un tissu tricoté, un matériau à fibres de cuir ou un non-tissé à microfibres, fabriqué selon un procédé selon l'une quelconque des revendications 1 à 9, **caractérisé en ce que** la couche (2) est formée par au moins une, de préférence une seule, couche d'une mousse PU expansée non réticulée ou pas encore réticulée ou faiblement sous-réticulée, qui présente le cas échéant une teneur en eau maximale de 1,5 % en poids, de préférence de 0,5 % en poids, est en particulier anhydre, dans lequel la couche (2) présente un point de ramollissement supérieur à 90 °C et est collante à une température de 90 à 145 °C, présente des propriétés thermoplastiques et est fluide sous pression ou peut être déformée de manière permanente et perd son caractère collant et est thermoplastique après une structuration et une réticulation se produisant sous l'impact de pression et de température, dans lequel une couche (3) supplémentaire de dispersion PU non expansée est appliquée sur la couche (2).

11. Matériau de couche selon la revendication 10, **caractérisé en ce que**
- la mousse PU expansée de la couche (2) présente un poids spécifique de 0,8 à 1,03 kg/dm³, et/ou
- la couche (2) de mousse PU expansée présente une épaisseur de 0,030 à 0,40 mm, de préférence de 0,070 à 0,350 mm, et/ou
- les polyuréthanes utilisés pour la couche (2) sont des polyuréthanes aliphatiques à base de polyéther ou de polyester ou de polycarbonate, et/ou
- la couche (2) de mousse PU expansée contient des pigments et/ou des agents de réticulation et/ou des polyacrylates et/ou des microbilles creuses et/ou des agents de matage, et/ou
- la couche (2) de mousse PU expansée solidifiée et séchée présente une dureté Shore A de 28 à 68.

12. Matériau de couche selon la revendication 10 ou 11, **caractérisé en ce que,** dans le cas d'une couche de support (1) formée par un matériau textile, une couche mince (5) de PVC souple expansé ou d'une couche de mousse expansée réticulée d'une dispersion PU est formée entre le matériau textile et la couche (2), laquelle couche (5) présente une épaisseur de 0,25 à 0,45 mm et constitue une couche de liaison pour la couche (2) en mousse PU expansée à appliquer, dans lequel les deux couches (2, 5) forment le cas échéant une épaisseur totale de 0,3 à 0,5 mm.

13. Matériau de couche selon l'une quelconque des revendications 10 à 12, **caractérisé en ce qu'**une couche mince (3) non expansée, structurable à chaud, constituée d'une dispersion PU ou d'un mélange de dispersion PU d'une épaisseur de 0,0150 à 0,60 mm, de préférence de 0,020 à 0,0350 mm, est appliquée sur la couche (2) ou reliée à la couche (2), dans lequel une structure correspondant au gaufrage de structure dans la couche (3) est formée ou gaufrée dans la couche (2) en mousse PU expansée, et dans lequel la couche (3) présente avantageusement une dureté Shore A supérieure à celle de la couche (2) ou une dureté Shore A supérieure à 70 et contient le cas échéant de 1 à 4 % en poids de polysiloxanes.

14. Matériau de couche selon l'une quelconque des revendications 10 à 13, **caractérisé en ce que**
- le cuir fleur est un cuir de vachette pleine fleur, de préférence du cuir refendu de bovin, du cuir de veau, du cuir de chèvre ou du cuir de kangourou, dont la couche de fleur est avantageusement retirée mécaniquement d'au moins 5 % à maximum 60 %, et/ou
- **en ce que** les fibres du non-tissé à microfibres sont constituées de polyester ou de polyamide, dans lequel les cavités entre les fibres sont imprégnées ou remplies d'une matière plastique, de préférence à base de polyuréthane ou de polyester, qui présente une structure de mousse ou une structure microcellulaire coagulée, et/ou
- **en ce que** la mousse PU expansée présente une structure à cellules ouvertes et/ou est perméable à l'air et/ou présente une perméabilité à la vapeur d'eau de plus de 0,50 mg/cm²/h, de préférence de plus de 0,12 mg/cm²/h, selon la norme DIN EN ISO 14268.

15. Objets fabriqués en utilisant un matériau de couche selon l'une quelconque des revendications 10 à 14, pouvant être obtenus par un procédé selon l'une quelconque des revendications 1 à 9, tels que des produits en bande, des découpes, des pièces découpées, des pièces de chaussures, des chaussures de sport et de travail, des semelles intérieures de chaussures, des sacs, des articles en cuir, des revêtements de volant, des revêtements de rembourrage, des revêtements de paroi intérieure et des housses de siège pour véhicules automobiles, dans lesquels la surface des objets ou de la couche (2) pouvant être structurée en surface présente un gaufrage structurel.

16. Objets selon la revendication 15, **caractérisés en ce que** la couche (2) et le cas échéant également la couche (3) reliée à la couche (2) ou appliquée sur la couche (2) est thermoplastique ou déformée ou structurée par application de chaleur et de pression.

17. Objets selon la revendication 15 ou 16, **caractérisés en ce que**
- une structuration est formée ou gaufrée sur la surface de la couche (2), et/ou
- la couche (2) en mousse PU expansée présente une épaisseur qui n'est que de 2 à 18 %, de préférence de 3 à 9 %, plus épaisse qu'une couche qui est formée à partir d'une quantité égale en poids d'une dispersion PU non expansée ou d'un mélange de dispersion PU non expansé de la même composition, après que cette quantité a été répartie sous la forme d'une couche sur une surface aussi grande que celle de la mousse PU expansée sous la forme de la couche (2).
